(19) Europäisches Patentamt / European Patent Office / Office européen des brevets

(11) **EP 4 230 573 A1**

(12) **EUROPEAN PATENT APPLICATION**
published in accordance with Art. 153(4) EPC

(43) Date of publication:
**23.08.2023 Bulletin 2023/34**

(21) Application number: **21879819.7**

(22) Date of filing: **15.09.2021**

(51) International Patent Classification (IPC):
**B81B 1/00** (2006.01)   **B81C 3/00** (2006.01)
**G01N 37/00** (2006.01)   **G01N 35/08** (2006.01)
**B01J 19/00** (2006.01)   **B29C 65/48** (2006.01)

(52) Cooperative Patent Classification (CPC):
**B01J 19/00; B29C 65/48; B81B 1/00; B81C 3/00;
G01N 35/08; G01N 37/00**

(86) International application number:
**PCT/JP2021/033930**

(87) International publication number:
**WO 2022/080077 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.10.2020   JP 2020174881
16.10.2020   JP 2020174882
16.10.2020   JP 2020174883**

(71) Applicant: **Sumitomo Bakelite Co., Ltd.
Shinagawa-ku
Tokyo 140-0002 (JP)**

(72) Inventor: **YAKUMARU, Kosuke
Tokyo 140-0002 (JP)**

(74) Representative: **Ter Meer Steinmeister & Partner
Patentanwälte mbB
Nymphenburger Straße 4
80335 München (DE)**

(54) **MICROCHANNEL CHIP**

(57)   The present invention provides a microchannel chip including: a resin substrate in which a channel groove is formed on at least one surface of the resin substrate; and a resin film which has a base layer and a pressure-sensitive adhesive layer and is bonded to the resin substrate such that the pressure-sensitive adhesive layer covers the channel groove, in which when a thickness of the base layer of the resin film is defined as X ($\mu$m), and a thickness of the pressure-sensitive adhesive layer of the resin film is defined as Y ($\mu$m), all of Relational Expressions (1) to (3) are satisfied.

$$(1)\ Y \geq 0.4X - 25$$

$$(2)\ 50 \geq Y \geq 3$$

$$(3)\ X \geq 40$$

FIG. 1

EP 4 230 573 A1

**Description**

Technical Field

The present invention relates to a microchannel chip used in the pharmaceutical industry and the like.

Background Art

In fields such as the pharmaceutical industry relating to the manufacture of pharmaceuticals and reagents and the like, microchannel chips are sometimes used for the analysis, synthesis, screening, and the like of nucleic acids, proteins, sugar chains, and the like. In this microchannel chip, a fine channel groove (also called microchannel) is formed in a substrate or the like made of resin or the like utilizing microfabrication techniques or the like. In a very small space having this microchannel, the chemical reaction, separation, detection, analysis, and the like can be performed on a sample (for example, PTL 1 and the like).

In addition, as such a microchannel chip used for analysis and the like, there are many microchannel chips having a substrate (resin substrate) which is made of resin and which has microchannels and the like formed on its surface, and having a resin film which is bonded to this resin substrate. The bonding between the resin substrate and the resin film is mainly performed by heat-welding or performed by sticking with a pressure-sensitive adhesive layer provided in the resin film.

Citation List

Patent Literature

[PTL 1] Japanese Unexamined Patent Application, First Publication No. 2014-206512

Summary of Invention

Technical Problem

However, there has been a problem in that when the resin substrate and the resin film are bonded to each other by sticking with a pressure-sensitive adhesive layer (laminating via a pressure-sensitive adhesive layer), a portion (portion with low followability), at which the pressure-sensitive adhesive layer does not sufficiently follow the resin substrate, is likely to be generated on the bonding surface, in other words, a microgap of the film is likely to be generated on the bonding surface, which allows the intrusion of a gas into a channel groove from this microgap portion at the time of liquid feeding to the channel groove or after liquid feeding thereto, thereby resulting in generation and remaining of air bubbles that hinder liquid feeding, chemical reaction, separation and detection, and the like. In particular, there are a case of feeding a liquid to a channel groove of a microchannel chip that has been stored in advance at a low temperature range (0°C to 10°C), or a case of storing a microchannel chip at about 35°C to 40°C (for example, near body temperature and the like) after liquid feeding to a channel groove. In such cases, the above-mentioned problem tends to occur more easily.

The present invention has been made in view of the above-mentioned problem, and an object of the present invention is to provide a microchannel chip in which very few air bubbles are generated and remain at the time of liquid feeding to a channel groove and at the time of storage after liquid feeding.

Solution to Problem

A microchannel chip according to a first aspect of the present invention is characterized by including: a resin substrate in which a channel groove is formed on at least one surface of the resin substrate; and a resin film which has a base layer and a pressure-sensitive adhesive layer and is bonded to the resin substrate such that the pressure-sensitive adhesive layer covers the channel groove, in which a surface roughness (Rz) of a bonding surface at which the resin substrate and the pressure-sensitive adhesive layer of the resin film are bonded is 7 $\mu$m or less.

A microchannel chip according to a second aspect of the present invention is characterized by including: a resin substrate in which a channel groove is formed on at least one surface of the resin substrate; and a resin film which has a base layer and a pressure-sensitive adhesive layer and is bonded to the resin substrate such that the pressure-sensitive adhesive layer covers the channel groove, in which when a thickness of the base layer of the resin film is defined as X ($\mu$m), and a thickness of the pressure-sensitive adhesive layer of the resin film is defined as Y ($\mu$m), all of Relational Expression (1) $Y \geq 0.4X - 25$, Relational Expression (2) $50 \geq Y \geq 3$, and Relational Expression (3) $X \geq 40$ are

satisfied.

A microchannel chip according to a third aspect of the present invention is characterized by including: a resin substrate in which a channel groove is formed on at least one surface of the resin substrate; and a resin film which has a base layer and a pressure-sensitive adhesive layer and is bonded to the resin substrate such that the pressure-sensitive adhesive layer covers the channel groove, in which when a square of a surface roughness (Rz) of a bonding surface at which the resin substrate and the pressure-sensitive adhesive layer of the resin film are bonded is defined as X ($\mu$m$^2$), and a total film gap area of the resin film per 100 $\mu$m$^2$ of the bonding surface is defined as Y ($\mu$m$^2$), all of Relational Expressions (1), (2), and (3) are satisfied.

$$(1)\ Y \leq 0.64X - 12.2$$

$$(2)\ X \geq 23.0$$

$$(3)\ Y \leq 20.0$$

Advantageous Effects of Invention

According to the present invention, a microchannel chip in which, at a bonding surface, a pressure-sensitive adhesive layer of a resin film has high followability with respect to a resin substrate, and in which very few air bubbles are generated and remain at the time of liquid feeding to a channel groove and at the time of storage after liquid feeding can be obtained.

Brief Description of Drawings

FIG. 1 is an enlarged cross-sectional view showing the vicinity of a channel groove of a microchannel chip according to the present embodiment.

FIG. 2 is a front view of the microchannel chip according to the present embodiment.

FIG. 3 is a captured image (photograph substituting for a drawing) showing the state in which storage was caused at 37°C for 1 hour after feeding ink water to channel grooves of a microchannel chip (stored at room temperature) as a sample 1 described in Example 1.

FIG. 4 is a captured image (photograph substituting for a drawing) showing the state in which storage was caused at 37°C for 1 hour after feeding ink water to a microchannel chip (stored at room temperature) as a sample 3 described in Example 1.

FIG. 5 is a captured image (photograph substituting for a drawing) showing the state in which storage was caused at 37°C for 1 hour after feeding ink water to the channel grooves of the microchannel chip (after refrigerated storage) as the sample 1 described in Example 1.

FIG. 6 is a captured image (photograph substituting for a drawing) showing the state in which storage was caused at 37°C for 1 hour after feeding ink water to a channel groove of the microchannel chip (after refrigerated storage) as the sample 3 described in Example 1.

FIG. 7 is a captured image (photograph substituting for a drawing) showing the state in which storage was caused at 37°C for 1 hour after feeding ink water to a channel groove of a microchannel chip (after refrigerated storage) as a sample 4 described in Example 1.

FIG. 8 is a graph showing the air bubble generation circumstance in the state in which storage was caused at 37°C for 1 hour after feeding water to channel grooves of microchannel chips (after refrigerated storage) as samples 1 to 9 described in Example 2, and showing relational expressions between a thickness (X: $\mu$m) of a base layer of a resin film and a thickness (Y: $\mu$m) of a pressure-sensitive adhesive layer of the resin film in the microchannel chips.

FIG. 9 is a captured image (photograph substituting for a drawing) showing the state in which storage was caused at 37°C for 1 hour after feeding water to the channel groove of the microchannel chip (after refrigerated storage) as the sample 1 described in Example 2.

FIG. 10 is a captured image (photograph substituting for a drawing) showing the state in which storage was caused at 37°C for 1 hour after feeding water to the channel groove of the microchannel chip (after refrigerated storage) as the sample 9 described in Example 2.

FIG. 11 shows enlarged cross-sectional views of a resin film or a microchannel chip in a peeling step (I), a pre-bonding heating step (II), and a bonding step (III) in a method for manufacturing a microchannel chip according to the present embodiment.

FIG. 12 is an enlarged cross-sectional view of a resin film in a modification example of the pre-bonding heating step in the method for manufacturing a microchannel chip according to the present embodiment.

FIG. 13 is a graph showing the relationship between the square (X: $\mu m^2$) of the surface roughness (Rz) of the bonding surface of the microchannel chip, and the total film gap area (Y: $\mu m^2$) of the resin film per 100 $\mu m^2$ of this bonding surface.

FIG. 14 shows images (photographs substituting for drawings) of the bonding surfaces of the microchannel chips of the samples 1 and 2 described in Example 3, where the images were taken with a laser microscope. (a) is a captured image of the bonding surface of the sample 1, and (b) is a captured image of the bonding surface of the sample 2.

FIG. 15 shows images (photographs substituting for drawings) of the bonding surfaces of the microchannel chips of the samples 3 and 4 described in Example 3, where the images were taken with a laser microscope. (c) is a captured image of the bonding surface of the sample 3, and (d) is a captured image of the bonding surface of the sample 4.

Description of Embodiments

Hereinbelow, embodiments of a microchannel chip and a method for manufacturing the same according to the present invention will be described with reference to the drawings.

The embodiments to be described below are merely examples for facilitating understanding of the present invention and do not limit the present invention. In other words, the shapes, dimensions, dispositions, and the like of members to be described below can be changed and improved without departing from the scope of the present invention, and the present invention obviously includes equivalents thereof.

In addition, in all of the drawings, the same constituent elements are denoted by the same reference numerals, and overlapping descriptions are omitted as appropriate. In all of the drawings, reference numerals are not given (omitted) to some parts for the sake of convenience. Furthermore, the dimensional ratio of each member shown in the drawings may differ from the actual dimensional ratio in order to facilitate understanding of the invention.

[First embodiment]

<Overview>

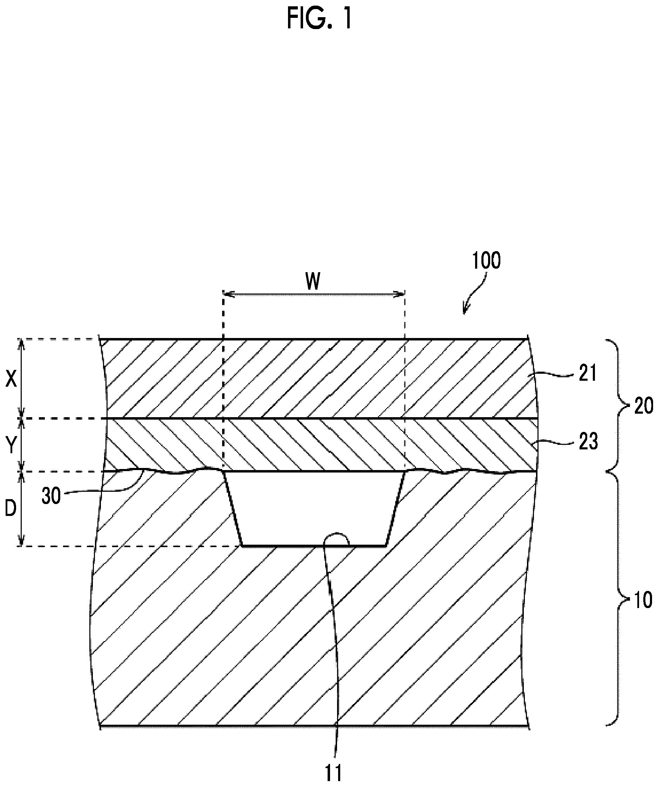

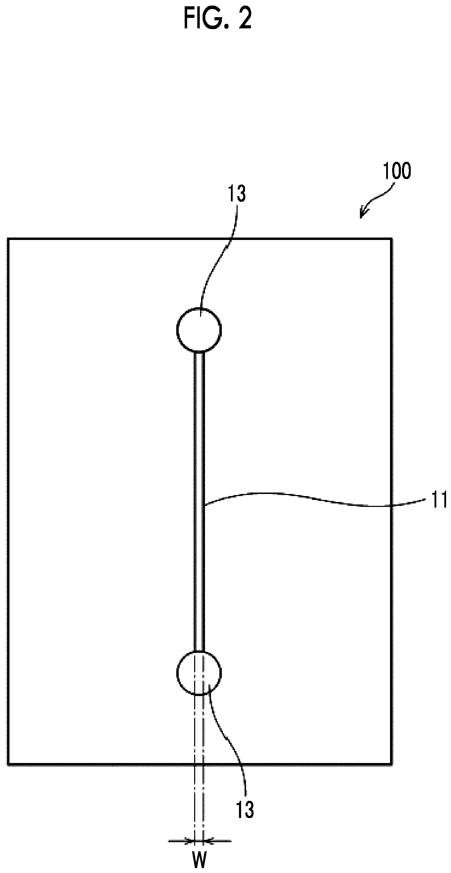

First, an overview of a microchannel chip according to the first embodiment of the present invention will be described with reference to FIGS. 1 and 2. FIG. 1 is an enlarged cross-sectional view schematically showing the vicinity of a channel groove 11 of a microchannel chip 100 according to the present embodiment. In addition, FIG. 2 is a view showing the microchannel chip 100 according to the present embodiment from the front.

As shown in FIGS. 1 and 2, the microchannel chip 100 according to the present embodiment is characterized by including: a resin substrate 10 in which a channel groove 11 is formed on at least one surface thereof; and a resin film 20 which has a base layer 21 and a pressure-sensitive adhesive layer 23 and is bonded to the resin substrate 10 such that the pressure-sensitive adhesive layer 23 covers the channel groove 11, in which a surface roughness (Rz: maximum height roughness) of a bonding surface 30 which is a surface at which the resin substrate 10 and the pressure-sensitive adhesive layer 23 of the resin film 20 are bonded is 7 $\mu m$ or less.

In addition, the microchannel chip 100 according to the present embodiment may not only have the configuration in which one resin substrate 10 and one resin film 20 are bonded as shown in FIGS. 1 and 2, but also have a configuration in which the channel grooves 11 are formed on both surfaces of the resin substrate 10, and each of the resin films 20 is bonded to both of these surfaces, in which both surface roughnesses (Rz) of the bonding surfaces 30 on both side are within a predetermined range, or have a configuration in which each of the pressure-sensitive adhesive layers 23 is provided on both surfaces of the base layer 21 of the resin film 20, and each of the surfaces of the resin substrate 10 on which the channel groove 11 is formed is bonded to both of these pressure-sensitive adhesive layers 23, in which in which both surface roughnesses (Rz) of the bonding surfaces 30 on both side are within a predetermined range.

In the microchannel chip 100 according to the present embodiment, on at least one surface of the resin substrate 10, for example, one or more ports 13 that can serve as an introduction port or discharge port for a sample or the like, or as a deaerating port may be formed as shown in FIG. 2. In addition, this port 13 may have a cylindrical shape as shown in FIG. 2, may have another shape such as a rectangular cylindrical shape, or may be formed to penetrate the resin substrate 10.

In addition, the global shape (outer shape) of the microchannel chip 100 according to the present embodiment is preferably a rectangular plate shape from the viewpoint of easiness of use in devices and the like, handleability, and the like, but the shape may be a circular plate shape and is not particularly limited as long as it is in the plate shape.

In addition, in the microchannel chip 100 according to the present embodiment, the surface roughness (Rz) of the bonding surface 30 at which the surface on which the channel groove 11 of the resin substrate 10 is formed is bonded to the pressure-sensitive adhesive layer 23 of the resin film 20 is 7 $\mu$m or less, more preferably less than 6 $\mu$m, further preferably less than 5.5 $\mu$m, and even further preferably less than 5 $\mu$m. On this bonding surface 30, the followability of the pressure-sensitive adhesive layer 23 with respect to the surface on which the channel groove 11 of the resin substrate 10 is formed is very high. In other words, on the bonding surface 30, there are very few microgaps (a gap portion generated when the pressure-sensitive adhesive layer 23 of the resin film 20 does not sufficiently follow the surface of the resin substrate 10, to which the pressure-sensitive adhesive layer is expected to be bonded, and is slightly separated) of the resin film 20.

Due to such a constitution, in the microchannel chip 100 according to the present embodiment, at the time of liquid feeding to the channel groove 11, at the time of storage of the microchannel chip 100 after this liquid feeding, and the like, the intrusion of a gas from the bonding surface 30 into the channel groove 11 occurs significantly less, and very few air bubbles are generated and remain in the channel groove 11. In particular, there is a case in which the microchannel chip is stored (incubated or the like) at about 35°C to 40°C for several tens of minutes to several hours after liquid feeding to the channel groove, but even in such a case, the microchannel chip 100 of the present embodiment is characterized in that microgaps of the resin film 20 are unlikely to be generated on the bonding surface 30, and similarly, very few air bubbles are generated and remain in the channel groove 11. In addition, when the above-mentioned surface roughness (Rz) of the bonding surface 30 is less than 6 $\mu$m in the microchannel chip 100, even in the case in which this microchannel chip 100 is preliminarily stored within a low temperature range (about 0°C to 10°C) before liquid feeding to the channel groove 11, very few air bubbles are generated and remain in the channel groove 11 at the time of liquid feeding and at the time of storage after the liquid feeding.

The term "surface roughness (Rz)" in the present invention means a maximum height roughness defined in JIS B 0601 (2013). In other words, a reference length is taken from the roughness curve of a surface (such as the bonding surface 30 in the present invention) in the direction of the average line, and the sum of the value of a maximum peak height Zp and the value of a maximum valley depth Zv of the roughness curve in this taken portion is represented by $\mu$m, which is the surface roughness.

In addition, the measurement of this surface roughness (Rz) is performed on a measurement surface (such as the bonding surface 30 in the present invention) using a noncontact measurement device (for example, a laser microscope VK-9710 manufactured by

KEYENCE CORPORATION).

<Resin substrate>

Next, the resin substrate 10 of the microchannel chip 100 according to the present embodiment will be described in detail.

The resin substrate 10 of the microchannel chip 100 according to the present embodiment is a plate-shaped substrate made of resin and having the channel groove 11 formed on at least one surface thereof. When the resin substrate 10 is, for example, rectangular, examples of the size thereof include about 10 mm or more and 100 mm or less × 10 mm or more and 200 mm or less, and examples of the thickness thereof include about 0.5 mm or more and 3.0 mm or less.

In addition, the channel groove 11 formed in the resin substrate 10 is a fine groove and may have an opening width and a depth which enable a liquid sample to pass therethrough. Examples of the opening width thereof (opening length in the lateral direction of the channel groove 11: the length of the portion indicated by W in the embodiment of FIGS. 1 and 2) include is 1 mm or less, preferably 20 $\mu$m or more and 500 $\mu$m or less, and examples of the depth thereof include 10 $\mu$m or more and 500 $\mu$m or less, preferably 20 $\mu$m or more and 100 $\mu$m or less. In addition, this channel groove 11 can be formed by using a mold capable of also forming the channel groove 11 when molding the resin substrate 10 by resin injection molding, or by microfabrication (cutting or adding a member) of the molded resin substrate 10.

In addition, regarding the shape of this channel groove 11, the cross-sectional shape thereof is not particularly limited and may be rectangular, polygonal, or semicircular. The cross-sectional shape is preferably trapezoidal or semicircular because then liquid feeding is easily stabilized. In addition, the number of the channel grooves 11 formed in the resin substrate 10 is not limited to one, and a plurality of the channel grooves 11 may be formed in series or in parallel. In addition, the channel grooves 11 may be branched or intersected, and can be appropriately designed according to use applications, while also including the above-mentioned cross-sectional shape, number, opening width, depth, and the like in the designing.

The depth of the channel groove 11 formed in the resin substrate 10 of the microchannel chip 100 according to the present embodiment is the length of the channel groove 11 in the thickness direction of the resin substrate 10. In other words, in the channel groove 11 formed in the resin substrate 10, when a perpendicular line (a line parallel to the thickness direction of the resin substrate 10) is drawn from the imaginary outer surface of the resin substrate 10 which has been present before the formation of the channel groove 11, the depth is the longest distance among the distances from the imaginary outer surface to a point at which the perpendicular line intersects the surface constituting the channel groove 11. For example, in the embodiment shown in FIG. 1, in the resin substrate 10 before bonding the resin film 20, when a perpendicular line is drawn from a line on the upper side (the imaginary outer surface on the resin film 20 side) of the formed channel groove 11 to a lower side, the depth of the channel groove 11 is the longest distance among distances between two points from a point on the line on the upper side to a point at which this perpendicular line intersects the line on the lower side (a bottom surface constituting the channel groove 11 having an inverted trapezoidal cross section) of the channel groove 11 (D in FIG. 1).

Furthermore, the channel groove 11 of the resin substrate 10 may be a channel groove of which the surface (the surface constituting the channel groove 11) has been subjected to a surface treatment such as a hydrophilization treatment or a treatment of forming a surface treatment functional group. Examples of such surface treatments include a treatment of introducing an oxygen-containing functional group. By introducing this oxygen-containing functional group, the hydrophilicity of this surface is improved, enabling a sample (a sample containing water or a hydrophilic solvent) to pass through more smoothly. Examples of oxygen-containing functional groups include polar functional groups such as a carbonyl group such as an aldehyde group and a ketone group, a carboxyl group, a hydroxyl group, an ether group, a peroxide group, and an epoxy group. In addition, as a treatment of introducing them, a plasma treatment, a corona discharge treatment, an excimer laser treatment, a flame treatment, and the like can be used. This surface treatment may also be applied to the surface (the surface of the pressure-sensitive adhesive layer 23) on the portion (that covers the channel groove 11) of the resin film 20 to be described later.

In addition, this resin substrate 10 is made of a resin material. The phrase "made of a resin material" means that the resin material is the main material (the resin material being contained by the amount of 60% by mass or more, more preferably 70% by mass or more, further preferably 80% by mass or more, and even further preferably 90% by mass or more in the total mass of the resin substrate 10). This resin substrate 10 may have, for example, a layer made of a material (for example, glass) other than the resin material on a portion of the surface side that is not bonded to the resin film 20, but it is preferable that the entire resin substrate 10 is made of a resin material (especially the same resin material). This is because the molding of the resin substrate 10 itself becomes easier. In addition, the channel grooves 11 may be formed on both surfaces of the resin substrate 10.

Examples of resin materials used for producing this resin substrate 10 include, but are not limited to, polyolefin resins such as polyethylene (PE), polypropylene (PP), and polymethylpentene (PMP); cyclic olefin resins such as a cycloolefin polymer (COP) and a cyclic olefin copolymer (COC); polystyrene resins such as polystyrene (PS); polycarbonate resins such as polycarbonate (PC); polyacrylic resins such as polymethyl methacrylate (PMMA); and polyester resins such as polyethylene terephthalate (PET), polybutylene terephthalate (PBT), and polyethylene naphthalate (PEN). In addition, one type of these may be used alone, or two or more types thereof may be used in combination. The resin substrate 10 can be made of such a resin material as a main material.

In particular, this resin substrate 10 is more preferably made of any one selected from the group consisting of polystyrene resins, polycarbonate resins, polyacrylic resins, and cyclic olefin resins, and is further preferably made of any one selected from the group consisting of polystyrene (PS), polycarbonate (PC), polymethyl methacrylate (PMMA), and a cyclic olefin copolymer (COC), because then the surface roughness (Rz) of the bonding surface 30 between the resin film 20 is easily adjusted within a predetermined range, bonding to the pressure-sensitive adhesive layer 23 of the resin film 20 becomes easy, and the transparency of the resin substrate 10 is easily ensured.

In addition, in order to set the surface roughness (Rz) of the bonding surface 30 between the resin substrate 10 and the resin film 20 within a predetermined range, in manufacturing the microchannel chip 100 according to the present embodiment, a resin substrate 10 in which the surface roughness (Rz) of the surface (the surface to be bonded to the pressure-sensitive adhesive layer 23 of the resin film 20) on which the channel groove 11 is formed is 7 μm or less, more preferably less than 6 μm, further preferably less than 5.5 μm, and even further preferably less than 5 μm is prepared, and this resin substrate 10 is used for bonding to the resin film 20. In particular, because the surface roughness (Rz) of the surface on which channel grooves 11 are formed is likely to become large at the time of molding or the like of a large-sized resin substrate 10 or a resin substrate 10 having a large number of channel grooves 11, it is suitable to adjust the surface roughness (Rz) so that it falls within the above-mentioned range by polishing and the like.

The surface (the surface on the inner side of the channel groove 11) of the resin substrate 10 which constitutes the channel groove 11 may have a surface roughness (Rz) of more than 7 μm unlike the surface to be bonded to the pressure-sensitive adhesive layer 23 of the resin film 20. In other words, in the microchannel chip 100 according to the present embodiment, the surface roughness (Rz) of the bonding surface 30 which is the surface at which the resin substrate 10 and the resin film 20 are bonded may have a different constitution from the surface roughness (Rz) of the surface of the channel groove 11. In such a constitution, it is not required to adjust the surface roughness (Rz) of the surface of the channel groove 11 to small, which is preferable because this facilitates molding of the resin substrate 10 and formation of the channel groove 11 which are used for manufacturing the microchannel chip 100 according to the present embodiment.

<Resin film>

Next, the resin film 20 of the microchannel chip 100 according to the present embodiment will be described in detail.

The resin film 20 of the microchannel chip 100 according to the present embodiment has a configuration in which the base layer 21, which serves as a base (basic material of a film) of the resin film 20, and the pressure-sensitive adhesive layer 23 containing a pressure-sensitive adhesive component are provided, and this base layer 21 and the pressure-sensitive adhesive layer 23 are laminated. In addition, the pressure-sensitive adhesive layer 23 of this resin film 20 is bonded to the surface of the resin substrate 10 on which the channel groove 11 is formed. This base layer 21 may be configured of one layer (single layer), or may have a configuration in which a plurality of layers serving as the base are laminated. In addition, the pressure-sensitive adhesive layer 23 is provided on at least one surface of the base layer 21, but a configuration in which the pressure-sensitive adhesive layers 23 are provided on both surfaces of the base layer 21, or a configuration in which the pressure-sensitive adhesive layer 23 is formed in a specific pattern (pattern-coated) on one surface of the base layer 21 may be adopted. Furthermore, other layers (for example, a coating layer, an adhesive layer (laminate adhesive layer), and the like) may be provided between the base layer 21 and the pressure-sensitive adhesive layer 23, on the surface side of the base layer 21 facing (opposite to) the surface side to be bonded to the resin substrate 10, or between laminates of the base layer 21 in which a plurality of layers serving as the base are laminated.

When the resin film 20 is, for example, rectangular, examples of the size thereof include the same size as that of the resin substrate 10 described above, that is, 10 mm or more and 100 mm or less × 10 mm or more and 200 mm or less. In addition, the lower limit of the thickness of the entire resin film 20 is preferably 0.01 mm or more, more preferably 0.02 mm or more, and further preferably 0.03 mm or more from the viewpoint of easiness of bonding to the resin substrate 10. In addition, the upper limit is preferably 1.0 mm or less, more preferably 0.5 mm or less, and further preferably 0.2 mm or less because then, at the bonding surface 30, the followability of the resin film 20 with respect to the resin substrate 10 is less likely to be influenced.

The thickness of the entire resin film 20 is obtained by measuring lengths between the main surfaces (between the front and back outer surfaces) of the resin film 20 at arbitrarily 10 points in a normal vector direction of the main surfaces of the resin film 20, and calculating the average thereof.

In addition, the lower limit of the thickness (X) of the base layer 21 of the resin film 20 is preferably 50 $\mu$m or more, more preferably 70 $\mu$m or more, further preferably 80 $\mu$m or more, even further preferably more than 85 $\mu$m, still further preferably 90 $\mu$m or more, and much more preferably 100 $\mu$m or more. In addition, the upper limit is preferably 130 $\mu$m or less, and more preferably 125 $\mu$m or less. This is because, then, the resin film 20 has an appropriate hardness, making bonding to the resin substrate 10 easy.

The thickness (X) of the base layer 21 is obtained by measuring lengths between the main surfaces (between the surfaces on both sides) of the base layer 21 at arbitrarily 10 points in a normal vector direction of the main surfaces of the base layer 21, and calculating the average thereof (where X in FIG. 1 is shown to facilitate understanding of the thickness of the base layer 21). When the base layer 21 has a configuration in which a plurality of layers serving as the base are laminated, the thickness (X) of the base layer 21 is the sum of the values obtained by calculating the thickness of each laminated layer serving as the base in the same manner as above.

Furthermore, the upper limit of the thickness (Y) of the pressure-sensitive adhesive layer 23 of the resin film 20 is preferably less than 20 $\mu$m, more preferably less than 15 $\mu$m, and further preferably 10 $\mu$m or less. This is because, then, the cost can be further reduced, and the expansion of the pressure-sensitive adhesive layer 23 into the channel groove 11 is further prevented when bonded to the resin substrate 10, making it easier to ensure the internal volume of the channel groove 11 (easier to obtain the channel groove 11 in which a liquid feeding speed and the like are more stabilized). In addition, in the present embodiment, even when using the resin film 20 in which the thickness of the pressure-sensitive adhesive layer 23 is thin, the followability of the resin film 20 with respect to the resin substrate 10 is maintained at a high level by setting the surface roughness (Rz) of the bonding surface 30 within a predetermined range. In addition, the lower limit of the thickness of the pressure-sensitive adhesive layer 23 is preferably 3 $\mu$m or more, and more preferably 5 $\mu$m or more from the viewpoint of maintaining the function of the pressure-sensitive adhesive layer 23 at a level higher than a certain level.

The thickness (Y) of the pressure-sensitive adhesive layer 23 is obtained by measuring lengths between the main surfaces (between the surfaces on both sides (one of which is the bonding surface 30)) of the pressure-sensitive adhesive layer 23 at arbitrarily 10 points in a normal vector direction of the main surfaces of the pressure-sensitive adhesive layer 23 bonded to one resin substrate 10, and calculating the average thereof (where Y in FIG. 1 is shown to facilitate understanding of the thickness of the pressure-sensitive adhesive layer 23). Therefore, in the case of the resin film 20 having the pressure-sensitive adhesive layer 23 on both surfaces of the base layer 21, the thickness (Y) of this pressure-sensitive adhesive layer 23 is the thickness of the pressure-sensitive adhesive layer 23 on one surface (surface on one side) bonded to the resin substrate 10 and is not the sum of the values of the thicknesses of the pressure-sensitive adhesive layers 23 on both surfaces.

In addition, examples of resin materials used for the base layer 21 of the resin film 20 include resin materials, which are the same as those used for the resin substrate 10, that is, polyolefin resins such as polyethylene (PE), polypropylene (PP), and polymethylpentene (PMP); cyclic olefin resins such as a cycloolefin polymer (COP) and a cyclic olefin copolymer (COC); polystyrene resins such as polystyrene (PS); polycarbonate resins such as polycarbonate (PC); polyacrylic resins such as polymethyl methacrylate (PMMA); and polyester resins such as polyethylene terephthalate (PET), polybutylene terephthalate (PBT), and polyethylene naphthalate (PEN). In addition, one type of these may also be used alone, or two or more types thereof may also be used in combination. In the case of using two or more types in combination, two or more types of resin materials may be mixed and used, or two or more types of layers made of a single resin material may be laminated and used. The base layer 21 of the resin film 20 can be made of such a resin material as a main material (which is contained by the amount of 60% by mass or more, more preferably 70% by mass or more, further preferably 80% by mass or more, and even further preferably 90% by mass or more, for example, in the total mass of the base layer 21)). The base layer 21 of the resin film 20 is preferably made of any one selected from the group consisting of polystyrene (PS), polycarbonate (PC), polymethyl methacrylate (PMMA), and a cyclic olefin copolymer (COC) (which are used as the main material), because then the transparency of the resin film 20 is easily ensured as in the case of the resin substrate 10 described above.

Furthermore, when the resin substrate 10 described above, and the base layer 21 of the resin film 20 are made of the same resin material, and when this resin material is any one selected from the group consisting of polystyrene (PS), polycarbonate (PC), polymethyl methacrylate (PMMA), and a cyclic olefin copolymer (COC), this is more suitable from the viewpoint of ensuring the transparency of the obtained microchannel chip 100 (easiness of observation work and the like).

In addition, examples of the pressure-sensitive adhesive component used in the pressure-sensitive adhesive layer 23 of the resin film 20 include one or more selected from polyacrylic resins (acrylic pressure-sensitive adhesives) such as acrylic acid esters, silicone resins (silicone pressure-sensitive adhesives) such as polydimethylsiloxane, and polyurethane resins (urethane pressure-sensitive adhesives) such as polyurethane. The pressure-sensitive adhesive layer 23 of the resin film 20 can be made of such a pressure-sensitive adhesive component as a main component (which is contained by the amount of 60% by mass or more, more preferably 70% by mass or more, further preferably 80% by mass or more, and even further preferably 90% by mass or more, for example, in the total mass of the pressure-sensitive adhesive layer 23)).

When the pressure-sensitive adhesive component constituting the pressure-sensitive adhesive layer 23 is a polyacrylic resin (acrylic pressure-sensitive adhesive), this is extremely preferable because then the followability of the resin film 20 with respect to the surface of the resin substrate 10 on which the channel groove 11 is formed becomes better easily due to the characteristics of the acrylic pressure-sensitive adhesive. In addition, in this case, it is further preferable that the resin substrate 10 be also made of polyacrylic resin, which is the same resin material type.

In addition, the resin film 20 of the microchannel chip 100 according to the present embodiment may further contain additives such as plasticizers, antioxidants, flame retardants, antistatic agents, pigments, and dyes within the range not impairing the effects of the present invention. The same applies to the resin substrate 10 described above.

In addition, in the resin film 20, electrode parts may be formed by metal vapor deposition or metal thin films to correspond to the channel grooves 11 and the ports 13 formed in the resin substrate 10.

<Regarding method for manufacturing microchannel chip>

Next, a method for manufacturing the microchannel chip 100 according to the present embodiment will be described.

The microchannel chip 100 according to the present embodiment is manufactured by bonding the above-mentioned resin substrate 10 and the above-mentioned resin film 20 by pressure bonding such that the pressure-sensitive adhesive layer 23 of the resin film 20 covers the surface of the resin substrate 10 on which the channel groove 11 is formed. This bonding step by pressure bonding between the resin substrate 10 and the resin film 20 can be performed using a press machine or the like, but unlike a bonding step by heat-welding, heating to melt the resin is not performed at the time of pressure bonding because bonding is performed by the pressure-sensitive adhesiveness of the pressure-sensitive adhesive layer 23. In addition, the bonding conditions and the like may be adjusted such that the surface roughness (Rz) of the bonding surface 30 between the resin substrate 10 and the resin film 20 is within a predetermined range.

In manufacturing the microchannel chip 100 according to the present embodiment, as described above, a resin substrate 10 in which the surface roughness (Rz) of the surface (the surface to be bonded to the pressure-sensitive adhesive layer 23 of the resin film 20) on which the channel groove 11 is formed has been preliminarily adjusted to 7 $\mu$m or less, more preferably less than 6 $\mu$m, further preferably less than 5.5 $\mu$m, and even further preferably less than 5 $\mu$m is prepared and used in order to set the surface roughness (Rz) of the bonding surface 30 after bonding between the resin substrate 10 and the resin film 20 within a predetermined range. Such a resin substrate 10 can be manufactured by a method in which the surface (excluding a mold portion for forming the channel groove 11) of a mold used for injection molding or the like of the resin substrate 10 is polished; a method (transfer molding method) in which a mold for molding is produced by transfer using a mold processed by shaving a mold portion for the channel groove 11, thereby molding the resin substrate 10 using this mold for molding; or the like, but from the viewpoint of easily adjusting the surface roughness described above, the resin substrate 10 is preferably molded by the transfer molding method.

In manufacturing the microchannel chip 100 according to the present embodiment, it is also possible to combine film bodies, pumps, valves, sensors, motors, mixers, gears, clutches, microlenses, electric circuits, and the like with each other to form a composite.

The microchannel chip according to the present invention including the embodiment described above can be used for the separation, detection, analysis, and the like of a sample, and it is also possible to bring two or more types of samples into contact with each other to cause a chemical reaction. In addition, the microchannel chip can be used extremely suitably since very few air bubbles are generated and remain at the time of liquid feeding to the channel groove and at the time of storage after this liquid feeding. In particular, the microchannel chip is characterized in that the above-mentioned effects are exhibited even when the microchannel chip is stored at the vicinity of the body temperature range (35°C to 40°C) of a living body after liquid feeding to the channel groove. Furthermore, the microchannel chip that exhibits the above-mentioned effects even when being preliminarily stored at a low temperature range (0°C to 10°C) can also be obtained.

In addition, the above-mentioned embodiment includes the following technical concept.

(1) A microchannel chip including: a resin substrate in which a channel groove is formed on at least one surface; and a resin film which has a base layer and a pressure-sensitive adhesive layer and is bonded to the resin substrate such that the pressure-sensitive adhesive layer covers the channel groove, in which a surface roughness (Rz) of a bonding surface at which the resin substrate and the pressure-sensitive adhesive layer of the resin film are bonded is 7 $\mu$m or less.

(2) The microchannel chip according to (1), in which the surface roughness (Rz) of the bonding surface is less than 6 $\mu$m.

(3) The microchannel chip according to (1) or (2), in which a thickness of the pressure-sensitive adhesive layer of the resin film is less than 20 $\mu$m.

(4) The microchannel chip according to any one of (1) to (3), in which the pressure-sensitive adhesive layer of the resin film is made of polyacrylic resin.

(5) The microchannel chip according to any one of (1) to (4), in which the resin substrate is made of any one selected from the group consisting of polystyrene resin, polycarbonate resin, polyacrylic resin, and cyclic olefin resin.

[Second embodiment]

<Overview>

First, an overview of a microchannel chip according to the second embodiment of the present invention will be described with reference to FIGS. 1 and 2. FIG. 1 is an enlarged cross-sectional view schematically showing the vicinity of a channel groove 11 of a microchannel chip 100 according to the present embodiment. In addition, FIG. 2 is a view showing the microchannel chip 100 according to the present embodiment from the front.

The microchannel chip 100 according to the present embodiment is characterized by including, as shown in FIGS. 1 and 2: a resin substrate 10 in which the channel groove 11 is formed on at least one surface; and a resin film 20 which has a base layer 21 and a pressure-sensitive adhesive layer 23 and is bonded to the resin substrate 10 such that the pressure-sensitive adhesive layer 23 covers the channel groove 11, and is also characterized in that, when a thickness of the base layer 21 of this resin film 20 is defined as X ($\mu$m), and a thickness of the pressure-sensitive adhesive layer 23 of the resin film 20 which is bonded to the resin substrate 10 is defined as Y ($\mu$m), all of Relational Expression (1) $Y \geq 0.4X - 25$, Relational Expression (2) $50 \geq Y \geq 3$, and Relational Expression (3) $X \geq 40$ are satisfied.

In addition, the microchannel chip 100 according to the present embodiment may not only have the configuration in which one resin substrate 10 and one resin film 20 are bonded as shown in FIGS. 1 and 2, but also have a configuration in which the channel grooves 11 are formed on both surfaces of the resin substrate 10, and each of the resin films 20 having the above-mentioned characteristics is bonded to both of these surfaces, or have a configuration in which each of the pressure-sensitive adhesive layers 23 having the thicknesses satisfying the above-mentioned relational expression is provided on both surfaces of the base layer 21 of the resin film 20, and each of the surfaces of the resin substrate 10 on which the channel groove 11 is formed is bonded to both of these pressure-sensitive adhesive layers 23.

In the microchannel chip 100 according to the present embodiment, on at least one surface of the resin substrate 10, for example, one or more ports 13 that can serve as an introduction port or discharge port for a sample or the like, or as a deaerating port may be formed as shown in FIG. 2. In addition, this port 13 may have a cylindrical shape as shown in FIG. 2, may have another shape such as a rectangular cylindrical shape, or may be formed to penetrate the resin substrate 10.

In addition, the global shape (outer shape) of the microchannel chip 100 according to the present embodiment is preferably a rectangular plate shape from the viewpoint of easiness of use in devices and the like, handleability, and the like, but the shape may be a circular plate shape and is not particularly limited as long as it is in the plate shape.

In addition, by adopting the constitution in which the thickness (X) of the base layer 21 of the resin film 20 and the thickness (Y) of the pressure-sensitive adhesive layer 23 of the resin film 20 are as described above, the microchannel chip 100 according to the present embodiment is characterized in that, at the bonding surface 30, the followability of the pressure-sensitive adhesive layer 23 of the resin film 20 with respect to the resin substrate 10 is high even when the surface roughness (Rz: maximum height roughness) of the bonding surface 30, which is the surface at which the surface of the resin substrate 10 on which the channel groove 11 is formed is bonded to the pressure-sensitive adhesive layer 23 of the resin film 20, is 5 µm or more, preferably 5.5 µm or more, more preferably 6 µm or more, further preferably more than 7 µm, even further preferably 8 µm or more, yet more preferably 9 µm or more, and much more preferably 10 µm or more, for example. Therefore, in manufacturing the microchannel chip 100 according to the present embodiment, the adjustment to reduce the surface roughness (Rz) of the surface (the surface to be bonded to the pressure-sensitive adhesive layer 23 of the resin film 20) of the resin substrate 10 to be prepared on which the channel groove 11 is formed may be omitted. However, the surface roughness (Rz) of the bonding surface 30 is more preferably 20 µm or less, further preferably 18 µm or less, and even further preferably 15 µm or less because then the effects of the present invention are sufficiently exhibited easily.

In the conventional microchannel chips, when the surface roughness (Rz) of a bonding surface is greater than a certain level, many portions (microgaps of a film) may be generated on this bonding surface, the portions being generated when a pressure-sensitive adhesive layer of a resin film does not sufficiently follow the surface of a resin substrate, to which the pressure-sensitive adhesive layer is expected to be bonded, and is slightly separated. However, the microchannel chip 100 according to the present embodiment is characterized in that, even when the surface roughness (Rz) of the bonding surface 30 is greater than a certain level, there are very few film microgaps on this bonding surface 30 (especially the bonding surface 30 near the channel groove 11), because the pressure-sensitive adhesive layer 23 of the resin film 20 sufficiently follows the surface of the resin substrate 10 and is bonded due to the condition in which the thickness (X) of the base layer 21 of the resin film 20 and the thickness (Y) of the pressure-sensitive adhesive layer 23 of the resin film 20 which is bonded to the resin substrate 10 satisfy all of Relational Expressions (1) to (3) described above.

In addition, in the microchannel chip 100 according to the present embodiment having such a constitution, at the time of liquid feeding to the channel groove 11, at the time of storage of the microchannel chip 100 after this liquid feeding, and the like, the intrusion of a gas from the bonding surface 30 into the channel groove 11 occurs significantly less, and very few air bubbles are generated and remain in the channel groove 11. In addition, there are a case in which the microchannel chip is refrigerated before liquid feeding to the channel groove, and a case in which the microchannel chip is stored (incubated or the like) at about 35°C to 40°C for several tens of minutes to several hours after liquid feeding to the channel groove, but even in such cases, in the microchannel chip 100 of the present embodiment, microgaps of the resin film 20 are unlikely to be generated on the bonding surface 30, and similarly, very few air bubbles are generated and remain in the channel groove 11.

The term "surface roughness (Rz)" in the present invention means a maximum height roughness defined in JIS B 0601 (2013). In other words, a reference length is taken from the roughness curve of a surface (such as the bonding surface 30 in the present invention) in the direction of the average line, and the sum of the value of a maximum peak height Zp and the value of a maximum valley depth Zv of the roughness curve in this taken portion is represented by µm, which is the surface roughness.

In addition, the measurement of this surface roughness (Rz) is performed on a measurement surface (such as the bonding surface 30 in the present invention) using a noncontact measurement device (for example, a laser microscope VK-9710 manufactured by

KEYENCE CORPORATION).

<Resin substrate>

Next, the resin substrate 10 of the microchannel chip 100 according to the present embodiment will be described in detail.

The resin substrate 10 of the microchannel chip 100 according to the present embodiment is a plate-shaped substrate made of resin and having the channel groove 11 formed on at least one surface thereof. When the resin substrate 10 is, for example, rectangular, examples of the size thereof include about 10 mm or more and 100 mm or less × 10 mm or more and 200 mm or less, and examples of the thickness thereof include about 0.5 mm or more and 3.0 mm or less.

In addition, the channel groove 11 formed in the resin substrate 10 is a fine groove and may have an opening width and a depth which enable a liquid sample to pass therethrough. Examples of the opening width thereof (opening length in the lateral direction of the channel groove 11: the length of the portion indicated by W in the embodiment of FIGS. 1 and 2) include is 1 mm or less, preferably 20 $\mu$m or more and 500 $\mu$m or less, and examples of the depth thereof include 10 $\mu$m or more and 500 $\mu$m or less, preferably 20 $\mu$m or more and 100 $\mu$m or less. In addition, this channel groove 11 can be formed by using a mold capable of also forming the channel groove 11 when molding the resin substrate 10 by resin injection molding, or by microfabrication (cutting or adding a member) of the molded resin substrate 10.

In addition, regarding the shape of this channel groove 11, the cross-sectional shape thereof is not particularly limited and may be rectangular, polygonal, or semicircular. The cross-sectional shape is preferably trapezoidal or semicircular because then liquid feeding is easily stabilized. In addition, the number of the channel grooves 11 formed in the resin substrate 10 is not limited to one, and a plurality of the channel grooves 11 may be formed in series or in parallel. In addition, the channel grooves 11 may be branched or intersected, and can be appropriately designed according to use applications, while also including the above-mentioned cross-sectional shape, number, opening width, depth, and the like in the designing.

The depth of the channel groove 11 formed in the resin substrate 10 of the microchannel chip 100 according to the present embodiment is the length of the channel groove 11 in the thickness direction of the resin substrate 10. In other words, in the channel groove 11 formed in the resin substrate 10, when a perpendicular line (a line parallel to the thickness direction of the resin substrate 10) is drawn from the imaginary outer surface of the resin substrate 10 which has been present before the formation of the channel groove 11, the depth is the longest distance among the distances from the imaginary outer surface to a point at which the perpendicular line intersects the surface constituting the channel groove 11. For example, in the embodiment shown in FIG. 1, in the resin substrate 10 before bonding the resin film 20, when a perpendicular line is drawn from a line on the upper side (the imaginary outer surface on the resin film 20 side) of the formed channel groove 11 to a lower side, the depth of the channel groove 11 is the longest distance among distances between two points from a point on the line on the upper side to a point at which this perpendicular line intersects the line on the lower side (a bottom surface constituting the channel groove 11 having an inverted trapezoidal cross section) of the channel groove 11 (D in FIG. 1).

Furthermore, the channel groove 11 of the resin substrate 10 may be a channel groove of which the surface (the surface constituting the channel groove 11) has been subjected to a surface treatment such as a hydrophilization treatment or a treatment of forming a surface treatment functional group. Examples of such surface treatments include a treatment of introducing an oxygen-containing functional group. By introducing this oxygen-containing functional group, the hydrophilicity of this surface is improved, enabling a sample (a sample containing water or a hydrophilic solvent) to pass through more smoothly. Examples of oxygen-containing functional groups include polar functional groups such as a carbonyl group such as an aldehyde group and a ketone group, a carboxyl group, a hydroxyl group, an ether group, a peroxide group, and an epoxy group. In addition, as a treatment of introducing them, a plasma treatment, a corona discharge treatment, an excimer laser treatment, a flame treatment, and the like can be used. This surface treatment may also be applied to the surface (the surface of the pressure-sensitive adhesive layer 23) on the portion (that covers the channel groove 11) of the resin film 20 to be described later.

In addition, this resin substrate 10 is made of a resin material. The phrase "made of a resin material" means that the resin material is the main material (the resin material being contained by the amount of 60% by mass or more, more preferably 70% by mass or more, further preferably 80% by mass or more, and even further preferably 90% by mass or more in the total mass of the resin substrate 10). This resin substrate 10 may have, for example, a layer made of a material (for example, glass) other than the resin material on a portion of the surface side that is not bonded to the resin film 20, but it is preferable that the entire resin substrate 10 is made of a resin material (especially the same resin material). This is because the molding of the resin substrate 10 itself becomes easier. In addition, the channel grooves 11 may be formed on both surfaces of the resin substrate 10.

Examples of resin materials used for producing this resin substrate 10 include, but are not limited to, polyolefin resins such as polyethylene (PE), polypropylene (PP), and polymethylpentene (PMP); cyclic olefin resins such as a cycloolefin polymer (COP) and a cyclic olefin copolymer (COC); polystyrene resins such as polystyrene (PS); polycarbonate resins such as polycarbonate (PC); polyacrylic resins such as polymethyl methacrylate (PMMA); and polyester resins such as polyethylene terephthalate (PET), polybutylene terephthalate (PBT), and polyethylene naphthalate (PEN). In addition, one type of these may be used alone, or two or more types thereof may be used in combination. The resin substrate 10 can be made of such a resin material as a main material.

In particular, this resin substrate 10 is more preferably made of any one selected from the group consisting of polystyrene resins, polycarbonate resins, polyacrylic resins, and cyclic olefin resins, and is further preferably made of any one selected from the group consisting of polystyrene (PS), polycarbonate (PC), polymethyl methacrylate (PMMA), and a cyclic olefin copolymer (COC), because then the transparency of the resin substrate 10 is easily ensured.

<Resin film>

Next, the resin film 20 of the microchannel chip 100 according to the present embodiment will be described in detail.

The resin film 20 of the microchannel chip 100 according to the present embodiment has a configuration in which the base layer 21, which serves as a base (basic material of a film) of the resin film 20, and the pressure-sensitive adhesive layer 23 containing a pressure-sensitive adhesive component are provided, and this base layer 21 and the pressure-sensitive adhesive layer 23 are laminated. In addition, the pressure-sensitive adhesive layer 23 of this resin film 20 is bonded to the surface of the resin substrate 10 on which the channel groove 11 is formed. This base layer 21 may be configured of one layer (single layer), or may have a configuration in which a plurality of layers serving as the base are laminated. In addition, the pressure-sensitive adhesive layer 23 is provided on at least one surface of the base layer 21, but a configuration in which the pressure-sensitive adhesive layers 23 are provided on both surfaces of the base layer 21, or a configuration in which the pressure-sensitive adhesive layer 23 is formed in a specific pattern (pattern-coated) on one surface of the base layer 21 may be adopted. Furthermore, other layers (for example, a coating layer, an adhesive layer (laminate adhesive layer), and the like) may be provided between the base layer 21 and the pressure-sensitive adhesive layer 23, on the surface side of the base layer 21 facing (opposite to) the surface side to be bonded to the resin substrate 10, or between laminates of the base layer 21 in which a plurality of layers serving as the base are laminated.

When the resin film 20 is, for example, rectangular, examples of the size thereof include the same size as that of the resin substrate 10 described above, that is, 10 mm or more and 100 mm or less × 10 mm or more and 200 mm or less. In addition, from the viewpoint of easiness of bonding to the resin substrate 10, the lower limit of the thickness of the entire resin film 20 is preferably 0.01 mm or more, more preferably 0.02 mm or more, and further preferably 0.03 mm or more while the thickness (X) of the base layer 21 and the thickness (Y) of the pressure-sensitive adhesive layer 23 bonded to the resin substrate 10 satisfy all of Relational Expressions (1) to (3) to be described later. In addition, the upper limit thereof is preferably 1.0 mm or less, more preferably 0.5 mm or less, and further preferably 0.2 mm or less while the thickness (X) of the base layer 21 and the thickness (Y) of the pressure-sensitive adhesive layer 23 bonded to the resin substrate 10 satisfy all of Relational Expressions (1) to (3) to be described later also in this case, because then, at the bonding surface 30, the followability of the resin film 20 with respect to the resin substrate 10 is less likely to be influenced.

The thickness of the entire resin film 20 is obtained by measuring lengths between the main surfaces (between the front and back outer surfaces) of the resin film 20 at arbitrarily 10 points in a normal vector direction of the main surfaces of the resin film 20, and calculating the average thereof.

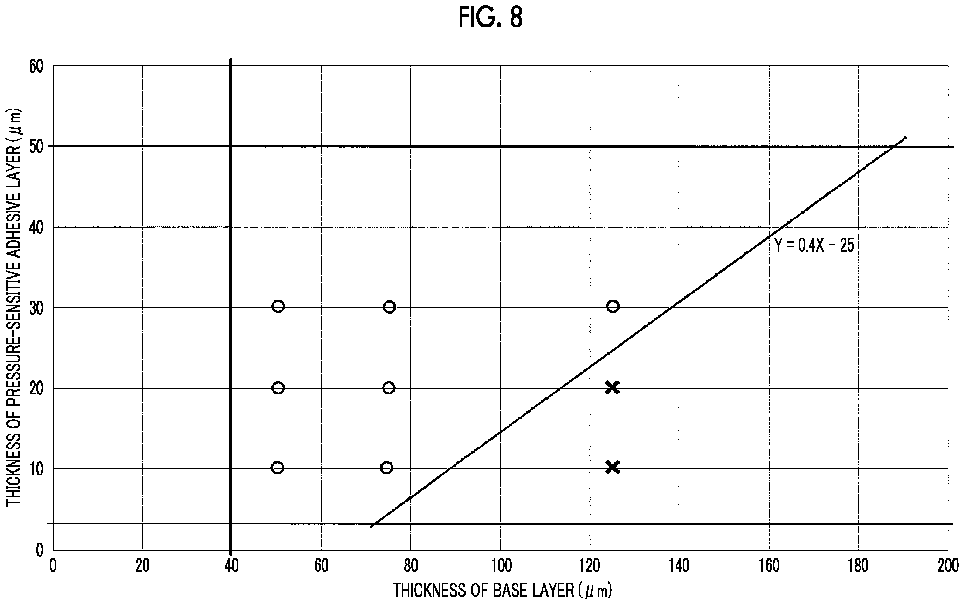

In addition, the resin film 20 of the microchannel chip 100 according to the present embodiment is constituted such that the thickness (X: $\mu$m) of the base layer 21 and the thickness (Y: $\mu$m) of the pressure-sensitive adhesive layer 23 bonded to the resin substrate 10 satisfy all of Relational Expression (1) $Y \geq 0.4X - 25$, Relational Expression (2) $50 \geq Y \geq 3$, and Relational Expression (3) $X \geq 40$ (refer to FIG. 8). With such a constitution, at the bonding surface 30, the pressure-sensitive adhesive layer 23 of the resin film 20 sufficiently follows the surface (surface to which the pressure-sensitive adhesive layer is expected to be bonded) of the resin substrate 10 on which the channel groove 11 is formed, resulting in very few film microgaps on the bonding surface 30. In a resin film 20 having the pressure-sensitive adhesive layers 23 on both surfaces of the base layer 21, it is sufficient for the thickness (X) of the base layer 21 and the thickness (Y) of one pressure-sensitive adhesive layer 23 bonded to the resin substrate 10 to satisfy Relational Expressions (1) to (3) described above, but when each of both pressure-sensitive adhesive layers 23 is bonded to the resin substrate 10, it is required that the thickness (X) of the base layer 21 and the thickness (Y) of each of the pressure-sensitive adhesive layers 23 individually (each independently) satisfy Relational Expressions (1) to (3) described above. In other words, Relational Expressions (1) to (3) described above are relational expressions of the thickness (X) of the base layer 21 of the resin film 20 and the thickness (Y) of the pressure-sensitive adhesive layer 23 which is bonded to the resin substrate 10 and is on one surface of this base layer 21.

In the resin film 20 of the microchannel chip 100 according to the present embodiment, the above-mentioned thickness (X) of the base layer 21 and the above-mentioned thickness (Y) of the pressure-sensitive adhesive layer 23 more preferably satisfy Relational Expression (4) $Y \geq 0.4X - 22$, and further preferably satisfy Relational Expression (5) $Y \geq 0.4X - 20$ from the viewpoint of further enhancing the followability at the bonding surface 30 with respect to the surface of the resin substrate 10 on which the channel groove 11 is formed.

In addition, the lower limit of the thickness (X) of the base layer 21 of the resin film 20 is preferably 45 $\mu$m or more ($X \geq 45$), more preferably 50 $\mu$m or more ($X \geq 50$), and further preferably 70 $\mu$m or more ($X \geq 70$). In addition, the upper limit thereof is preferably 130 μm or less (130 ≥ X), more preferably 125 μm or less (125 ≥ X), further preferably 110 μm or less (110 ≥ X), even further preferably less than 100 μm (100 > X), still further preferably less than 90 μm (90 > X), and yet more preferably 85 μm or less (85 ≥ X). Examples of preferable ranges of X include 50 μm or more and 130 μm or less (130 ≥ X ≥ 50). This is because, then, in manufacturing the microchannel chip 100 according to the present embodiment, the resin film 20 has an appropriate hardness, making bonding to the resin substrate 10 easy, and also, at the bonding surface 30 of the obtained microchannel chip 100, the followability of the resin film 20 with respect to the resin substrate 10 is maintained at a high level.

The thickness (X) of the base layer 21 is obtained by measuring lengths between the main surfaces (between the surfaces on both sides) of the base layer 21 at arbitrarily 10 points in a normal vector direction of the main surfaces of the base layer 21, and calculating the average thereof (where X in FIG. 1 is shown to facilitate understanding of the thickness of the base layer 21). When the base layer 21 has a configuration in which a plurality of layers serving as the base are laminated, the thickness (X) of the base layer 21 is the sum of the values obtained by calculating the thickness of each laminated layer serving as the base in the same manner as above.

In addition, the lower limit of the thickness (Y) of the pressure-sensitive adhesive layer 23 of the resin film 20 is preferably 5 μm or more (Y ≥ 5), more preferably more than 10 μm (Y > 10), further preferably 15 μm or more (Y ≥ 15), and even further preferably 20 μm or more (Y ≥ 20). In addition, the upper limit thereof is preferably 45 μm or less (45 ≥ Y), more preferably 40 μm or less (40 ≥ Y), further preferably 35 μm or less (35 ≥ Y), and even further preferably 30 μm or less (30 ≥ Y). Examples of preferable ranges of Y include 5 μm or more and 40 μm or less (40 ≥ Y ≥ 5). This is because, then, even when the surface roughness (Rz) of the surface of the resin substrate 10 before bonding on which the channel groove 11 is formed is greater than a certain level, the followability of the resin film 20 with respect to the resin substrate 10 is enhanced at the bonding surface 30 of the obtained microchannel chip 100, and also, the bonded pressure-sensitive adhesive layer 23 is less likely to expand into the channel groove 11, making the internal volume of the channel groove 11 less likely to decrease (making it easier to obtain the channel groove 11 in which a liquid feeding speed and the like are more stabilized).

The thickness (Y) of the pressure-sensitive adhesive layer 23 is obtained by measuring lengths between the main surfaces (between the surfaces on both sides (one of which is the bonding surface 30)) of the pressure-sensitive adhesive layer 23 at arbitrarily 10 points in a normal vector direction of the main surfaces of the pressure-sensitive adhesive layer 23 bonded to one resin substrate 10, and calculating the average thereof (where Y in FIG. 1 is shown to facilitate understanding of the thickness of the pressure-sensitive adhesive layer 23). Therefore, in the case of the resin film 20 having the pressure-sensitive adhesive layer 23 on both surfaces of the base layer 21, the thickness (Y) of this pressure-sensitive adhesive layer 23 is the thickness of the pressure-sensitive adhesive layer 23 on one surface (surface on one side) bonded to the resin substrate 10 and is not the sum of the values of the thicknesses of the pressure-sensitive adhesive layers 23 on both surfaces.

In addition, examples of resin materials used for the base layer 21 of the resin film 20 include resin materials, which are the same as those used for the resin substrate 10, that is, polyolefin resins such as polyethylene (PE), polypropylene (PP), and polymethylpentene (PMP); cyclic olefin resins such as a cycloolefin polymer (COP) and a cyclic olefin copolymer (COC); polystyrene resins such as polystyrene (PS); polycarbonate resins such as polycarbonate (PC); polyacrylic resins such as polymethyl methacrylate (PMMA); and polyester resins such as polyethylene terephthalate (PET), polybutylene terephthalate (PBT), and polyethylene naphthalate (PEN). In addition, one type of these may also be used alone, or two or more types thereof may also be used in combination. In the case of using two or more types in combination, two or more types of resin materials may be mixed and used, or two or more types of layers made of a single resin material may be laminated and used. The base layer 21 of the resin film 20 can be made of such a resin material as a main material (which is contained by the amount of 60% by mass or more, more preferably 70% by mass or more, further preferably 80% by mass or more, and even further preferably 90% by mass or more, for example, in the total mass of the base layer 21)).

The base layer 21 is preferably made of any one selected from the group consisting of polystyrene resins, polycarbonate resins, polyacrylic resins, and cyclic olefin resins (which are used as a main material), and is more preferably made of any one selected from the group consisting of polystyrene (PS), polycarbonate (PC), polymethyl methacrylate (PMMA), and a cyclic olefin copolymer (COC), because then the effects of the present invention can be exhibited more easily, and the transparency of the resin film 20 is easily ensured as in the case of the above-mentioned resin substrate 10.

Furthermore, when the resin substrate 10 described above, and the base layer 21 of the resin film 20 are made of the same resin material, and when this resin material is any one selected from the group consisting of polystyrene (PS), polycarbonate (PC), polymethyl methacrylate (PMMA), and a cyclic olefin copolymer (COC), this is more suitable from the viewpoint of ensuring the transparency of the obtained microchannel chip 100 (easiness of observation work and the like).

In addition, examples of the pressure-sensitive adhesive component used in the pressure-sensitive adhesive layer 23 of the resin film 20 include one or more selected from polyacrylic resins (acrylic pressure-sensitive adhesives) such as acrylic acid esters, silicone resins (silicone pressure-sensitive adhesives) such as polydimethylsiloxane, and polyurethane resins (urethane pressure-sensitive adhesives) such as polyurethane. The pressure-sensitive adhesive layer 23 of the resin film 20 can be made of such a pressure-sensitive adhesive component as a main component (which is contained by the amount of 60% by mass or more, more preferably 70% by mass or more, further preferably 80% by mass or more, and even further preferably 90% by mass or more, for example, in the total mass of the pressure-sensitive adhesive layer 23)).

In the pressure-sensitive adhesive layer 23 having the thickness satisfying the above-mentioned relational expression, when the pressure-sensitive adhesive component constituting the pressure-sensitive adhesive layer 23 is a polyacrylic resin (acrylic pressure-sensitive adhesive), this is extremely preferable because then the followability of the resin film 20 with respect to the surface of the resin substrate 10 on which the channel groove 11 is formed becomes better easily due to the characteristics of the acrylic pressure-sensitive adhesive. In addition, in this case, it is further preferable that the resin substrate 10 be also made of polyacrylic resin, which is the same resin material type.

In addition, the resin film 20 of the microchannel chip 100 according to the present embodiment may further contain additives such as plasticizers, antioxidants, flame retardants, antistatic agents, pigments, and dyes within the range not impairing the effects of the present invention. The same applies to the resin substrate 10 described above.

In addition, in the resin film 20, electrode parts may be formed by metal vapor deposition or metal thin films to correspond to the channel grooves 11 and the ports 13 formed in the resin substrate 10.

<Regarding method for manufacturing microchannel chip>

Next, a method for manufacturing the microchannel chip 100 according to the present embodiment will be described.

The microchannel chip 100 according to the present embodiment is manufactured by bonding the above-mentioned resin substrate 10 and the above-mentioned resin film 20 by pressure bonding such that the pressure-sensitive adhesive layer 23 of the resin film 20 covers the surface of the resin substrate 10 on which the channel groove 11 is formed. This bonding step by pressure bonding between the resin substrate 10 and the resin film 20 can be performed using a press machine or the like, but unlike a bonding step by heat-welding, heating to melt the resin is not performed at the time of pressure bonding because bonding is performed by the pressure-sensitive adhesiveness of the pressure-sensitive adhesive layer 23.

As described above, the resin film 20 before bonding which is used for manufacturing the microchannel chip 100 according to the present embodiment is preferably a resin film in which the thickness (X) of the base layer 21 and the thickness (Y) of the pressure-sensitive adhesive layer 23 have been preliminarily adjusted such that the resin film has a constitution in which the thickness (X) of the base layer 21 and the thickness (Y) of the pressure-sensitive adhesive layer 23 bonded to the resin substrate 10 satisfy all of Relational Expression (1) $Y \geq 0.4X - 25$, Relational Expression (2) $50 \geq Y \geq 3$, and Relational Expression (3) $X \geq 40$ after bonding to the resin substrate 10, that is, in the state of the microchannel chip. In particular, a resin film, which has a constitution in which the thickness (X) of the base layer 21 and the thickness (Y) of the pressure-sensitive adhesive layer 23 satisfy all of Relational Expression (1) $Y \geq 0.4X - 25$, Relational Expression (2) $50 \geq Y \geq 3$, and Relational Expression (3) $X \geq 40$ even before bonding to the resin substrate 10, is suitable. Alternatively, a constitution, in which the thickness (X) of the base layer 21 of the resin film 20 in the obtained microchannel chip 100 and the thickness (Y) of the pressure-sensitive adhesive layer 23 bonded to the resin substrate 10 satisfy all of the above-mentioned relational expressions by adjusting the bonding conditions (such as pressure) in the bonding of the pressure-sensitive adhesive layer 23 of the resin film 20 to the resin substrate 10, is also preferable.

In manufacturing the microchannel chip 100 according to the present embodiment, it is also possible to combine film bodies, pumps, valves, sensors, motors, mixers, gears, clutches, microlenses, electric circuits, and the like with each other to form a composite.

The microchannel chip according to the present invention including the embodiment described above can be used for the separation, detection, analysis, and the like of a sample, and it is also possible to bring two or more types of samples into contact with each other to cause a chemical reaction. In addition, the microchannel chip can be used extremely suitably since very few air bubbles are generated and remain at the time of liquid feeding to the channel groove and at the time of storage after this liquid feeding. In particular, the microchannel chip is characterized in that, even when the microchannel chip is preliminarily stored at a low temperature range (0°C to 10°C) and when the microchannel chip is stored at the vicinity of the body temperature range (35°C to 40°C) of a living body after liquid feeding to the channel groove, microgaps of the resin film 20 are unlikely to be generated on the bonding surface, and thereby the above-mentioned effects are exhibited in the same manner.

In addition, the above-mentioned embodiment includes the following technical concept.

<1> A microchannel chip including: a resin substrate in which a channel groove is formed on at least one surface of the resin substrate; and a resin film which has a base layer and a pressure-sensitive adhesive layer and is bonded to the resin substrate such that the pressure-sensitive adhesive layer covers the channel groove, in which when a thickness of the base layer of the resin film is defined as X ($\mu$m), and a thickness of the pressure-sensitive adhesive layer of the resin film is defined as Y ($\mu$m), all of Relational Expressions (1) to (3) are satisfied.

$$(1)\ Y \geq 0.4X - 25$$

$$(2)\ 50 \geq Y \geq 3$$

$$(3)\ X \geq 40$$

<2> The microchannel chip according to <1>, in which the thickness X ($\mu$m) of the base layer of the resin film and the thickness Y ($\mu$m) of the pressure-sensitive adhesive layer of the resin film further satisfy Relational Expression (4).

$$(4)\ Y \geq 0.4X - 22$$

<3> The microchannel chip according to <1> or <2>, in which the thickness Y ($\mu$m) of the pressure-sensitive adhesive layer of the resin film is 40 $\mu$m or less (40 $\geq$ Y).
<4> The microchannel chip according to any one of <1> to <3>, in which the thickness X ($\mu$m) of the base layer of the resin film is 50 $\mu$m or more and 130 $\mu$m or less (130 $\geq$ X $\geq$ 50).
<5> The microchannel chip according to any one of <1> to <4>, in which the pressure-sensitive adhesive layer of the resin film is made of polyacrylic resin.
<6> The microchannel chip according to any one of <1> to <5>, in which the base layer of the resin film is made of any one selected from the group consisting of polystyrene resin, polycarbonate resin, polyacrylic resin, and cyclic olefin resin.

[Third embodiment]

<Overview>

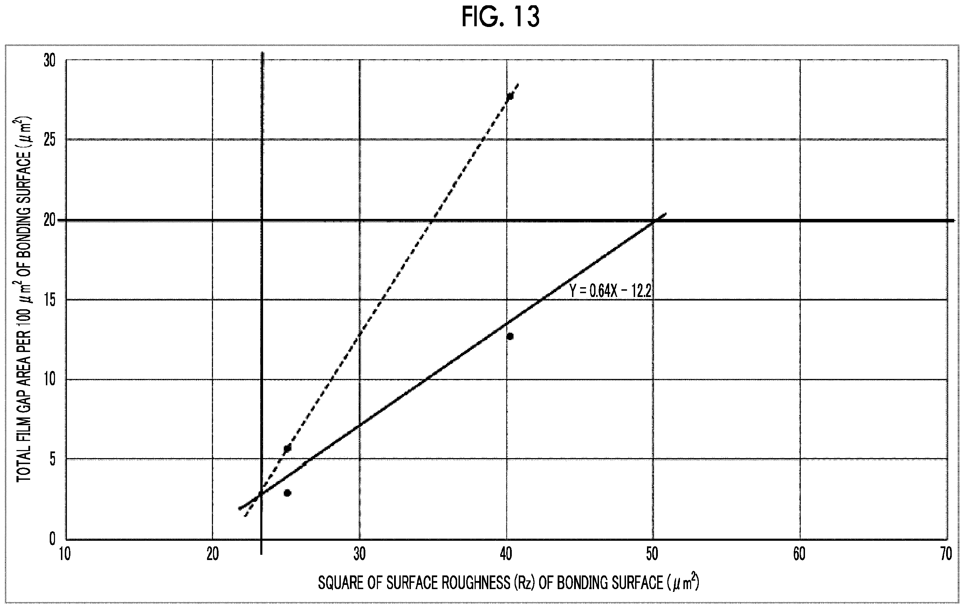

First, an overview of a microchannel chip according to the third embodiment of the present invention will be described with reference to FIGS. 1, 2, and 13, and the like. FIG. 1 is an enlarged cross-sectional view schematically showing the vicinity of a channel groove 11 of a microchannel chip 100 according to the present embodiment. In addition, FIG. 2 is a view showing the microchannel chip 100 according to the present embodiment from the front. In addition, FIG. 13 is a graph showing the relationship between the square (X: $\mu$m$^2$) of the surface roughness (Rz) of a bonding surface 30 of the microchannel chip 100 according to the present embodiment, and the total film gap area (Y: $\mu$m$^2$) of a resin film 20 per 100 $\mu$m$^2$ of the bonding surface 30.
As shown in FIGS. 1 and 2, the microchannel chip 100 according to the present embodiment is characterized by including: a resin substrate 10 in which the channel groove 11 is formed on at least one surface thereof; and the resin film 20 which has a base layer 21 and a pressure-sensitive adhesive layer 23 and is bonded to the resin substrate 10 such that the pressure-sensitive adhesive layer 23 covers the channel groove 11. In addition, the microchannel chip is characterized in that, when the square of the surface roughness (maximum height roughness: Rz) of the bonding surface 30 at which the resin substrate 10 and the pressure-sensitive adhesive layer 23 of the resin film 20 are bonded is defined as X ($\mu$m$^2$), and the total film gap area of the resin film 20 per 100 $\mu$m$^2$ of the bonding surface 30 is defined as Y ($\mu$m$^2$), all of Relational Expression (1) Y $\leq$ 0.64X - 12.2, Relational Expression (2) X $\geq$ 23.0, and Relational Expression (3) Y $\leq$ 20.0 are satisfied. This is based on the finding that, as shown in the data (FIG. 13 and the like) of examples to be described later, when the surface roughness (Rz) of the bonding surface 30 of the microchannel chip 100 is greater than a certain level, the resin film 20 before bonding is heated under predetermined conditions and then bonded to the resin substrate 10, which makes it possible to keep the total film gap area on the bonding surface 30 to below a certain level in relation to the square of the surface roughness (Rz) of the bonding surface 30, and thereby air bubbles are less likely to be generated and less likely to remain in the channel groove 11. Therefore, such a microchannel chip 100 according to the present embodiment can be obtained by a method for manufacturing the microchannel chip 100 according to the present embodiment which includes a pre-bonding heating step to be described later. These numerical values are significant digits up to the displayed digit (the same applies hereinafter).

The term "film gap" in the microchannel chip 100 of the present embodiment refers to a portion (microgap of a film) generated on the bonding surface 30 when the pressure-sensitive adhesive layer 23 of the resin film 20 does not sufficiently follow the surface of the resin substrate 10, to which the pressure-sensitive adhesive layer is expected to be bonded, and is slightly separated. In FIG. 1 and the like, the film gap on the bonding surface 30 is not explicitly shown in some cases.

In addition, the microchannel chip 100 according to the present embodiment may not only have the configuration in which one resin substrate 10 and one resin film 20 are bonded as shown in FIGS. 1 and 2, but also have a configuration in which the channel grooves 11 are formed on both surfaces of the resin substrate 10, and each of the resin films 20 is bonded to both of these surfaces, or have a configuration in which each of the pressure-sensitive adhesive layers 23 is provided on both surfaces of the base layer 21 of the resin film 20, and each of the surfaces of the resin substrate 10 on which the channel groove 11 is formed is bonded to both of these pressure-sensitive adhesive layers 23.

In addition, in the microchannel chip 100 according to the present embodiment, on at least one surface of the resin substrate 10, for example, one or more ports 13 that can serve as an introduction port or discharge port for a sample or the like, or as a deaerating port may be formed as shown in FIG. 2. In addition, this port 13 may have a cylindrical shape as shown in FIG. 2, may have another shape such as a rectangular cylindrical shape, or may be formed to penetrate the resin substrate 10.

In addition, the global shape (outer shape) of the microchannel chip 100 according to the present embodiment is preferably a rectangular plate shape from the viewpoint of easiness of use in devices and the like, handleability, and the like, but the shape may be a circular plate shape and is not particularly limited as long as it is in the plate shape.

In addition, as described above, in the microchannel chip 100 according to the present embodiment, the square (X: $\mu m^2$) of the surface roughness (Rz) of the bonding surface 30, and the total film gap area (Y: $\mu m^2$) of the resin film 20 per 100 $\mu m^2$ of the bonding surface 30 satisfy all of Relational Expression (1) $Y \leq 0.64X - 12.2$, Relational Expression (2) $X \geq 23.0$, and Relational Expression (3) $Y \leq 20.0$ (provided that the proportion of the total film gap area on the bonding surface 30 is 20.0% or less) (FIG. 13 and the like). In the case of a configuration in which each of the resin films 20 is bonded to both surfaces of the above-mentioned resin substrate 10 and a configuration in which each of the resin substrates 10 is bonded to both surfaces of the resin film 20, a constitution in which X and Y satisfy all of Relational Expressions (1) to (3) described above in at least one of both bonding surfaces 30 is suitable, and a constitution in which X and Y satisfy all of Relational Expressions (1) to (3) described above in both bonding surfaces 30 is more suitable.

Regarding Relational Expression (1) described above, this relational expression is derived based on the data (FIG. 13 and the like) of the examples to be described later, but the microchannel chip 100 according to the present embodiment may further satisfy $Y \leq 0.64X - 12.5$ (Relational Expression (4)), and may still further satisfy $Y \leq 0.64X - 12.8$ (Relational Expression (5)).

In addition, regarding Relational Expression (2) described above, the lower limit of X is more preferably 25.0 or more ($X \geq 25.0$, Rz of 5 $\mu m$ or more), further preferably 30.25 or more ($X \geq 30.25$, Rz of 5.5 $\mu m$ or more), even further preferably 31.6 or more ($X \geq 31.6$), still further preferably 33.0 or more ($X \geq 33.0$), and yet more preferably 34.3 or more ($X \geq 34.3$). This is because, then, the effect of the pre-bonding heating step (heating of the resin film 20 before bonding under predetermined conditions), which will be described later, is more easily exhibited in manufacturing the microchannel chip 100 according to the present embodiment. In addition, the lower limit of X may be 35.0 or more ($X \geq 35.0$), or may be 36.0 or more ($X \geq 36.0$, Rz of 6 $\mu m$ or more).

In addition, the upper limit of X is more preferably less than 64.0 ($X < 64.0$, Rz of less than 8 $\mu m$), and is further preferably 56.25 or less ($X \leq 56.25$, Rz of 7.5 $\mu m$ or less). This is because, then, it is easier to adjust the conditions of the pre-bonding heating step, which will be described later, in manufacturing the microchannel chip 100 of the present embodiment. However, even when X is larger, the microchannel chip 100 of the present embodiment which satisfies Relational Expressions (1) and (3) described above can be manufactured by adjusting (for example, setting the heating temperature and/or the heating time near the upper limit within a predetermined range) the conditions of the pre-bonding heating step to be described later. In addition, the upper limit of X is more preferably 52.0 or less ($X \leq 52.0$), further preferably 51.4 or less ($X \leq 51.4$), even further preferably 50.3 or less ($X \leq 50.3$), still further preferably 49.0 or less ($X \leq 49.0$, Rz of 7 $\mu m$ or less), yet more preferably 48.7 or less ($X \leq 48.7$), much more preferably 45.6 or less ($X \leq 45.6$), and far more preferably 42.5 or less ($X \leq 42.5$). This is because then the microchannel chip 100 in which the value of Y is smaller (for example, less than 19.0, preferably less than 17.0, and more preferably 15.0 or less) is easily obtained.

For microchannel chips, because it is required to design the number, patterns, and the like of channel grooves according to the purpose, the surface roughness (Rz) of a bonding surface between a resin substrate and a pressure-sensitive adhesive layer of a resin film is greater than a certain level in some cases due to the processing problems and the difficulty of polishing. In such cases, there is a probability of generation of many film gaps on this bonding surface. However, the microchannel chip 100 according to the present embodiment is characterized in that even when the surface roughness (Rz) of the bonding surface 30 is relatively large, since the resin film 20 is bonded after being heated under predetermined conditions in the pre-bonding heating step to be described later, X and Y satisfy all of Relational Expressions (1) to (3) described above, resulting in very few film microgaps on the bonding surface 30 (especially the bonding surface 30 near the channel groove 11). In addition, in the microchannel chip 100 according to the present embodiment having such a constitution, at the time of liquid feeding to the channel groove 11 and at the time of storage (at the time of storage at room temperature (25°C), for example) of the microchannel chip 100 after this liquid feeding, the intrusion of a gas from the bonding surface 30 into the channel groove 11 occurs significantly less, and very few air bubbles are generated and remain in the channel groove 11.

The term "surface roughness (Rz)" in the present invention means a maximum height roughness defined in JIS B 0601 (2013). In other words, a reference length is taken from the roughness curve of a surface (such as the bonding surface 30 in the present invention) in the direction of the average line, and the sum of the value of a maximum peak height Zp and the value of a maximum valley depth Zv of the roughness curve in this taken portion is represented by $\mu$m, which is the surface roughness.

In addition, the measurement of this surface roughness (Rz) is performed on a measurement surface (such as the bonding surface 30 in the present invention) using a noncontact measurement device (for example, a laser microscope VK-9710 manufactured by KEYENCE CORPORATION).

<Resin substrate>

Next, the resin substrate 10 of the microchannel chip 100 according to the present embodiment will be described in detail.

The resin substrate 10 of the microchannel chip 100 according to the present embodiment is a plate-shaped substrate made of resin and having the channel groove 11 formed on at least one surface thereof. When the resin substrate 10 is, for example, rectangular, examples of the size thereof include about 10 mm or more and 100 mm or less $\times$ 10 mm or more and 200 mm or less, and examples of the thickness thereof include about 0.5 mm or more and 3.0 mm or less.

In addition, the channel groove 11 formed in the resin substrate 10 is a fine groove and may have an opening width and a depth which enable a liquid sample to pass therethrough. Examples of the opening width thereof (opening length in the lateral direction of the channel groove 11: the length of the portion indicated by W in the embodiment of FIGS. 1 and 2) include is 1 mm or less, preferably 20 $\mu$m or more and 500 $\mu$m or less, and examples of the depth thereof include 10 $\mu$m or more and 500 $\mu$m or less, preferably 20 $\mu$m or more and 100 $\mu$m or less. In addition, this channel groove 11 can be formed by using a mold capable of also forming the channel groove 11 when molding the resin substrate 10 by resin injection molding, or by microfabrication (cutting or adding a member) of the molded resin substrate 10.

In addition, regarding the shape of this channel groove 11, the cross-sectional shape thereof is not particularly limited and may be rectangular, polygonal, or semicircular. The cross-sectional shape is preferably trapezoidal or semicircular because then liquid feeding is easily stabilized. In addition, the number of the channel grooves 11 formed in the resin substrate 10 is not limited to one, and a plurality of the channel grooves 11 may be formed in series or in parallel. In addition, the channel grooves 11 may be branched or intersected, and can be appropriately designed according to use applications, while also including the above-mentioned cross-sectional shape, number, opening width, depth, and the like in the designing.

The depth of the channel groove 11 formed in the resin substrate 10 of the microchannel chip 100 according to the present embodiment is the length of the channel groove 11 in the thickness direction of the resin substrate 10. In other words, in the channel groove 11 formed in the resin substrate 10, when a perpendicular line (a line parallel to the thickness direction of the resin substrate 10) is drawn from the imaginary outer surface of the resin substrate 10 which has been present before the formation of the channel groove 11, the depth is the longest distance among the distances from the imaginary outer surface to a point at which the perpendicular line intersects the surface constituting the channel groove 11. For example, in the embodiment shown in FIG. 1, in the resin substrate 10 before bonding the resin film 20, when a perpendicular line is drawn from a line on the upper side (the imaginary outer surface on the resin film 20 side) of the formed channel groove 11 to a lower side, the depth of the channel groove 11 is the longest distance among distances between two points from a point on the line on the upper side to a point at which this perpendicular line intersects the line on the lower side (a bottom surface constituting the channel groove 11 having an inverted trapezoidal cross section) of the channel groove 11 (D in FIG. 1).

Furthermore, the channel groove 11 of the resin substrate 10 may be a channel groove of which the surface (the surface constituting the channel groove 11) has been subjected to a surface treatment such as a hydrophilization treatment or a treatment of forming a surface treatment functional group. Examples of such surface treatments include a treatment of introducing an oxygen-containing functional group. By introducing this oxygen-containing functional group, the hydrophilicity of this surface is improved, enabling a sample (a sample containing water or a hydrophilic solvent) to pass through more smoothly. Examples of oxygen-containing functional groups include polar functional groups such as a carbonyl group such as an aldehyde group and a ketone group, a carboxyl group, a hydroxyl group, an ether group, a peroxide group, and an epoxy group. In addition, as a treatment of introducing them, a plasma treatment, a corona discharge treatment, an excimer laser treatment, a flame treatment, and the like can be used. This surface treatment may also be applied to the surface (the surface of the pressure-sensitive adhesive layer 23) on the portion (that covers the channel groove 11) of the resin film 20 to be described later.

In addition, this resin substrate 10 is made of a resin material. The phrase "made of a resin material" means that the resin material is the main material (the resin material being contained by the amount of 60% by mass or more, more preferably 70% by mass or more, further preferably 80% by mass or more, and even further preferably 90% by mass or more in the total mass of the resin substrate 10). This resin substrate 10 may have, for example, a layer made of a material (for example, glass) other than the resin material on a portion of the surface side that is not bonded to the resin film 20, but it is preferable that the entire resin substrate 10 is made of a resin material (especially the same resin material). This is because the molding of the resin substrate 10 itself becomes easier. In addition, the channel grooves 11 may be formed on both surfaces of the resin substrate 10.

Examples of resin materials used for producing this resin substrate 10 include, but are not limited to, polyolefin resins such as polyethylene (PE), polypropylene (PP), and polymethylpentene (PMP); cyclic olefin resins such as a cycloolefin polymer (COP) and a cyclic olefin copolymer (COC); polystyrene resins such as polystyrene (PS); polycarbonate resins such as polycarbonate (PC); polyacrylic resins such as polymethyl methacrylate (PMMA); and polyester resins such as polyethylene terephthalate (PET), polybutylene terephthalate (PBT), and polyethylene naphthalate (PEN). In addition, one type of these may be used alone, or two or more types thereof may be used in combination. The resin substrate 10 can be made of such a resin material as a main material.

In particular, this resin substrate 10 is more preferably made of any one selected from the group consisting of polystyrene resins, polycarbonate resins, polyacrylic resins, and cyclic olefin resins, and is further preferably made of any one selected from the group consisting of polystyrene (PS), polycarbonate (PC), polymethyl methacrylate (PMMA), and a cyclic olefin copolymer (COC), because then the bonding between the above-mentioned resin film 20 and the pressure-sensitive adhesive layer 23 becomes easy, and the transparency of the resin substrate 10 is easily ensured.

<Resin film>

Next, the resin film 20 of the microchannel chip 100 according to the present embodiment will be described in detail.

The resin film 20 of the microchannel chip 100 according to the present embodiment has a configuration in which the base layer 21, which serves as a base (basic material of a film) of the resin film 20, and the pressure-sensitive adhesive layer 23 containing a pressure-sensitive adhesive component are provided, and this base layer 21 and the pressure-sensitive adhesive layer 23 are laminated. In addition, the pressure-sensitive adhesive layer 23 of this resin film 20 is bonded to the surface of the resin substrate 10 on which the channel groove 11 is formed. This base layer 21 may be configured of one layer (single layer), or may have a configuration in which a plurality of layers serving as the base are laminated. In addition, the pressure-sensitive adhesive layer 23 is provided on at least one surface of the base layer 21, but a configuration in which the pressure-sensitive adhesive layers 23 are provided on both surfaces of the base layer 21, or a configuration in which the pressure-sensitive adhesive layer 23 is formed in a specific pattern (pattern-coated) on one surface of the base layer 21 may be adopted. Furthermore, other layers (for example, a coating layer, an adhesive layer (laminate adhesive layer), and the like) may be provided between the base layer 21 and the pressure-sensitive adhesive layer 23, on the surface side of the base layer 21 facing (opposite to) the surface side to be bonded to the resin substrate 10, or between laminates of the base layer 21 in which a plurality of layers serving as the base are laminated.

When the resin film 20 is, for example, rectangular, examples of the size thereof include the same size as that of the resin substrate 10 described above, that is, 10 mm or more and 100 mm or less × 10 mm or more and 200 mm or less. In addition, the lower limit of the thickness of the entire resin film 20 is preferably 0.01 mm or more, more preferably 0.02 mm or more, and further preferably 0.03 mm or more from the viewpoint of easiness of bonding to the resin substrate 10. In addition, the upper limit is preferably 1.0 mm or less, more preferably 0.5 mm or less, and further preferably 0.2 mm or less because then, at the bonding surface 30, the followability of the resin film 20 with respect to the resin substrate 10 is less likely to be influenced.

The thickness of the entire resin film 20 is obtained by measuring lengths between the main surfaces (between the front and back outer surfaces) of the resin film 20 at arbitrarily 10 points in a normal vector direction of the main surfaces of the resin film 20, and calculating the average thereof.

In addition, the lower limit of the thickness of the base layer 21 of the resin film 20 is preferably 50 $\mu$m or more, more preferably 70 $\mu$m or more, further preferably 80 $\mu$m or more, even further preferably more than 85 $\mu$m, still further preferably 90 $\mu$m or more, and much more preferably 100 $\mu$m or more. In addition, the upper limit is preferably 130 $\mu$m or less, and more preferably 125 $\mu$m or less. This is because, then, the hardness of the resin film 20 is likely to be in a preferable state by heating in the pre-bonding heating step to be described later, making the bonding of the resin film 20 to the resin substrate 10 easy.

The thickness of the base layer 21 is obtained by measuring lengths between the main surfaces (between the surfaces on both sides) of the base layer 21 at arbitrarily 10 points in a normal vector direction of the main surfaces of the base layer 21, and calculating the average thereof. When the base layer 21 has a configuration in which a plurality of layers serving as the base are laminated, the thickness of the base layer 21 is the sum of the values obtained by calculating the thickness of each laminated layer serving as the base in the same manner as above.

Furthermore, the upper limit of the thickness of the pressure-sensitive adhesive layer 23 of the resin film 20 is preferably less than 20 μm, more preferably less than 15 μm, and further preferably 10 μm or less. This is because, then, the viscosity is easily reduced by heating in the pre-bonding heating step to be described later, the manufacturing cost can be further reduced by making the thickness of the pressure-sensitive adhesive layer 23 thin, and furthermore, the expansion of the pressure-sensitive adhesive layer 23 into the channel groove 11 is further prevented when bonded to the resin substrate 10, making it easier to ensure the internal volume of the channel groove 11 (easier to obtain the channel groove 11 in which a liquid feeding speed and the like are more stabilized). In addition, the lower limit of the thickness of the pressure-sensitive adhesive layer 23 is preferably 3 μm or more, and more preferably 5 μm or more from the viewpoint of maintaining the function of the pressure-sensitive adhesive layer 23.

The thickness of the pressure-sensitive adhesive layer 23 is obtained by measuring lengths between the main surfaces (between the surfaces on both sides (one of which is the bonding surface 30)) of the pressure-sensitive adhesive layer 23 at arbitrarily 10 points in a normal vector direction of the main surfaces of the pressure-sensitive adhesive layer 23 bonded to one resin substrate 10, and calculating the average thereof. Therefore, in the case of the resin film 20 having the pressure-sensitive adhesive layer 23 on both surfaces of the base layer 21, the thickness of this pressure-sensitive adhesive layer 23 is the thickness of the pressure-sensitive adhesive layer 23 on one surface (surface on one side) bonded to the resin substrate 10 and is not the sum of the values of the thicknesses of the pressure-sensitive adhesive layers 23 on both surfaces.

In addition, examples of resin materials used for the base layer 21 of the resin film 20 include polyolefin resins such as polyethylene (PE), polypropylene (PP), and polymethylpentene (PMP); cyclic olefin resins such as a cycloolefin polymer (COP) and a cyclic olefin copolymer (COC); polystyrene resins such as polystyrene (PS); polycarbonate resins such as polycarbonate (PC); polyacrylic resins such as polymethyl methacrylate (PMMA); and polyester resins such as polyethylene terephthalate (PET), polybutylene terephthalate (PBT), and polyethylene naphthalate (PEN). In addition, one type of these may be used alone, or two or more types thereof may be used in combination. In the case of using two or more types in combination, two or more types of resin materials may be mixed and used, or two or more types of layers made of a single resin material may be laminated and used. The base layer 21 of the resin film 20 can be made of such a resin material as a main material (which is contained by the amount of 60% by mass or more, more preferably 70% by mass or more, further preferably 80% by mass or more, and even further preferably 90% by mass or more, for example, in the total mass of the base layer 21)).

The base layer 21 of the resin film 20 is more preferably made of any one selected from the group consisting of polystyrene resins, polycarbonate resins, polyacrylic resins, and cyclic olefin resins (which are used as a main material), and the base layer 21 is further preferably made of any one selected from the group consisting of polystyrene (PS), polycarbonate (PC), polymethyl methacrylate (PMMA), and a cyclic olefin copolymer (COC), because then the effect of heating in the pre-bonding heating step to be described later is easily exhibited, and also, the transparency of the resin film 20 is easily ensured.

Furthermore, when the resin substrate 10 described above, and the base layer 21 of the resin film 20 are made of the same resin material, and when this resin material is any one selected from the group consisting of polystyrene (PS), polycarbonate (PC), polymethyl methacrylate (PMMA), and a cyclic olefin copolymer (COC), this is further suitable from the viewpoint of ensuring the transparency of the obtained microchannel chip 100 (easiness of observation work and the like).

In addition, examples of the pressure-sensitive adhesive component used in the pressure-sensitive adhesive layer 23 of the resin film 20 include one or more selected from polyacrylic resins (acrylic pressure-sensitive adhesives) such as acrylic acid esters, silicone resins (silicone pressure-sensitive adhesives) such as polydimethylsiloxane, and polyurethane resins (urethane pressure-sensitive adhesives) such as polyurethane. The pressure-sensitive adhesive layer 23 of the resin film 20 can be made of such a pressure-sensitive adhesive component as a main component (which is contained by the amount of 60% by mass or more, more preferably 70% by mass or more, further preferably 80% by mass or more, and even further preferably 90% by mass or more, for example, in the total mass of the pressure-sensitive adhesive layer 23)).

When the pressure-sensitive adhesive component constituting the pressure-sensitive adhesive layer 23 is a polyacrylic resin (acrylic pressure-sensitive adhesive), this is extremely preferable because then the effect of heating in the pre-bonding heating step is more easily exhibited, and also, the followability of the resin film 20 with respect to the surface of the resin substrate 10 on which the channel groove 11 is formed becomes better easily due to the characteristics of the acrylic pressure-sensitive adhesive. In addition, in this case, it is further preferable that the resin substrate 10 be also made of polyacrylic resin, which is the same resin material type.

In addition, the resin film 20 of the microchannel chip 100 according to the present embodiment may further contain additives such as plasticizers, antioxidants, flame retardants, antistatic agents, pigments, and dyes within the range not impairing the effects of the present invention. The same applies to the resin substrate 10 described above.

In addition, in the resin film 20, electrode parts may be formed by metal vapor deposition or metal thin films to correspond to the channel grooves 11 and the ports 13 formed in the resin substrate 10.

In addition, the resin film 20 may be a resin film in which a peelable film 25 has been laminated to the pressure-sensitive adhesive layer 23 before bonding to the resin substrate 10. This peelable film 25 is not particularly limited as long as it is a film that can be peeled off from the pressure-sensitive adhesive layer 23, but it is suitable that the peelable film 25 be a film of which a material (for example, a material made of a resin material (such as polyethylene terephthalate (PET)), a paper material, or the like), a strength, and a thickness are less likely to influence the characteristics of the pressure-sensitive adhesive layer 23 of the resin film 20 when the peelable film 25 is peeled off. In addition, the size thereof is also not particularly limited as long as it is a size that makes laminating to the pressure-sensitive adhesive layer 23 of the resin film 20 possible, but it is more suitable that at least a part of the peelable film 25 protrudes from the outer shape of the resin film 20 when the peelable film is laminated on the pressure-sensitive adhesive layer 23 of the resin film 20 and that the peelable film 25 is larger than the size of the resin film 20 on which the peelable film is laminated, because then peeling from the pressure-sensitive adhesive layer 23 of the resin film 20 is easier.

<Method for manufacturing microchannel chip>

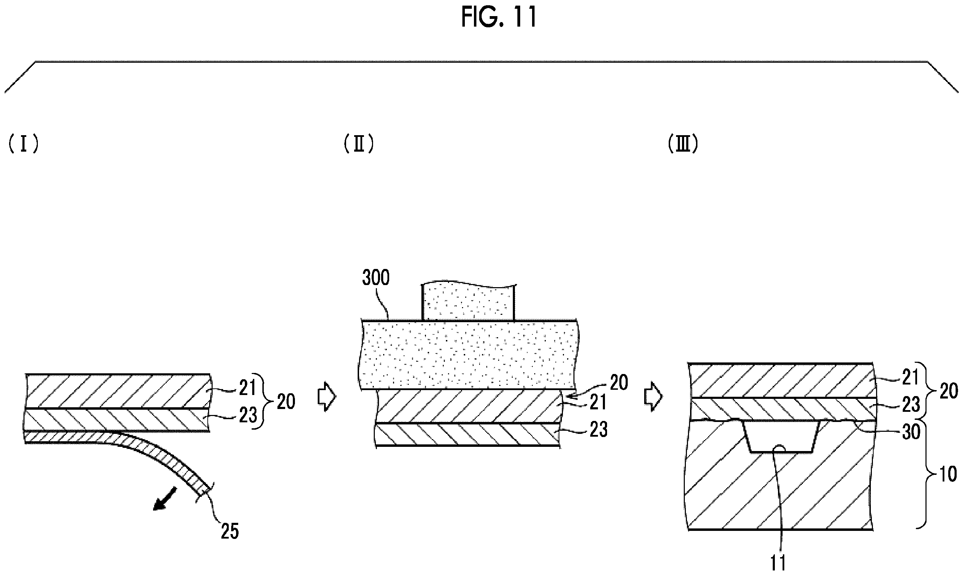

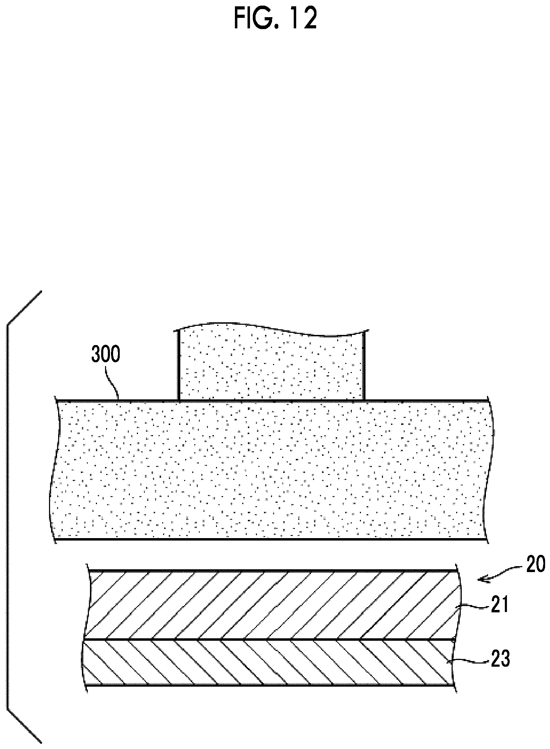

Next, a method for manufacturing the microchannel chip 100 according to the present embodiment will be described with reference to FIGS. 11 and 12. FIG. 11 shows enlarged cross-sectional views of the resin film 20 or the microchannel chip 100 in each step of a peeling step, a pre-bonding heating step, and a bonding step in the method for manufacturing the microchannel chip 100 according to the present embodiment. FIG. 12 is an enlarged cross-sectional view of the resin film 20 in the pre-bonding heating step in a modification example of the method for manufacturing the microchannel chip 100 according to the present embodiment.

The method for manufacturing the microchannel chip 100 according to the present embodiment is characterized by including: the pre-bonding heating step of heating the resin film 20 before being bonded to the resin substrate 10 for 1 to 300 seconds at a temperature within the range of ±20°C around the glass transition point (Tg) of the resin material constituting the base layer 21 of the resin film 20; and the bonding step of bonding, by pressure bonding, the pressure-sensitive adhesive layer 23 of the heated resin film 20 after this pre-bonding heating step to the surface of the resin substrate 10 on which the channel groove 11 is formed.

In addition, the method for manufacturing the microchannel chip 100 according to the present embodiment may include arbitrary steps other than the above-mentioned pre-bonding heating step and the bonding step within a range not influencing the effects of the present invention. For example, a cleaning step of the resin substrate 10 before bonding; a composite step of combining film bodies, pumps, valves, sensors, motors, mixers, gears, clutches, microlenses, electric circuits, and the like with each other to form a composite; and the like may be included.

In addition, in the method for manufacturing the microchannel chip 100 according to the present embodiment, the resin film 20 and the resin substrate 10 of the above-mentioned embodiments can be used.

The resin substrate 10 used in the method for manufacturing the microchannel chip 100 according to the present embodiment may also be a resin substrate in which the surface roughness (Rz) of the surface (the surface to be bonded to the pressure-sensitive adhesive layer 23 of the resin film 20) on which the channel groove 11 is formed has been adjusted by polishing or the like in order to set the square of the surface roughness (Rz) of the bonding surface 30 of the obtained microchannel chip 100 within a predetermined range.

<Pre-bonding heating step>

Next, the pre-bonding heating step of the method for manufacturing the microchannel chip 100 according to the present embodiment will be described in detail.

In this pre-bonding heating step, as shown in (II) of FIG. 11, the resin film 20 before being bonded to the resin substrate 10 is heated for 1 to 300 seconds at a temperature (temperature of equal to or higher than Tg - 20°C and equal to or lower than Tg + 20°C) within the range of ±20°C around the glass transition point (Tg) of the resin material constituting the base layer 21 of the resin film 20. This makes it possible to appropriately reduce (soften) the hardness of the base layer 21 and to appropriately reduce the viscosity of the pressure-sensitive adhesive component of the pressure-sensitive adhesive layer 23, thereby obtaining the resin film 20 that sufficiently follows the resin substrate 10 in the bonding step to be described later. The resin film 20 can be heated by a method of heating by bringing a heat source such as a heater 300 into direct contact with the resin film 20 (for example, (II) of FIG. 11), or heating with a heat source via the atmosphere or a medium of the resin film 20 (for example, FIG. 12).

The heating temperature is the temperature of the heat source when the resin film 20 to be heated and the heat source are brought into direct contact with each other, and is the temperature of the atmosphere or a medium in contact with the resin film 20 when the resin film 20 to be heated and the heat source are not brought into direct contact with each other. In addition, the heating temperature is more preferably within the range of $\pm 15°C$ around the glass transition point (Tg) of the resin material constituting the base layer 21 of the resin film 20, and is further preferably within the range of $\pm 10°C$, because then the resin film 20 is easily brought into a state more adapted for bonding. In addition, for the same reason, the lower limit of the heating time is more preferably 2 seconds or longer, further preferably 3 seconds or longer, and even further preferably 5 seconds or longer. The upper limit of the heating time is also more preferably 270 seconds or shorter, further preferably 240 seconds or shorter, and even further preferably 210 seconds or shorter. In addition, when the surface roughness (Rz) of the surface of the resin substrate 10 to be bonded to the resin film 20 is relatively large, it is suitable to adjust the heating temperature and the heating time in a region close to the upper limit within the above-mentioned range.

In addition, particularly in this pre-bonding heating step, it is more preferable to heat the resin film 20 in which the surface of the pressure-sensitive adhesive layer 23 to be bonded to the resin substrate 10 is exposed. This is because, then, the state of the pressure-sensitive adhesive layer 23 being heated is easily maintained until the bonding step to be described later because it is not required to peel off the peelable film 25 after heating, which makes bonding to the resin substrate 10 possible while maintaining the state of the pressure-sensitive adhesive layer 23 being heated, thereby further enhancing the followability of the resin film 20 with respect to the resin substrate 10. For example, it is suitable to heat, in this pre-bonding heating step, the resin film 20 from which the peelable film 25 laminated on the pressure-sensitive adhesive layer 23 has been peeled off in the peeling step ((I) of FIG. 11). In addition, an embodiment in which the peeling step and the pre-bonding heating step are consecutively performed may be adopted. However, in the method for manufacturing the microchannel chip 100 according to the present embodiment, an embodiment in which the peelable film 25 is peeled off after heating the resin film 20 with the peelable film 25 in the pre-bonding heating step may be adopted.

The sentence "the surface of the pressure-sensitive adhesive layer 23 is exposed" in the present embodiment refers to the state in which 70% or more of the area is exposed (state of being not in contact with or not laminated on other layers and the like), more preferably 80% or more of the area is exposed, further preferably 90% or more of the area is exposed, and even further preferably 100% of the area is exposed in the surface of the pressure-sensitive adhesive layer 23 to be bonded to the surface of the resin substrate 10 on which the channel groove 11 is formed.

In addition, in the pre-bonding heating step, it is more preferable to heat the resin film 20 with a heat source provided on the side opposite to the side of the pressure-sensitive adhesive layer 23 to be bonded to the resin substrate 10. For example, in the case of the resin film 20 having the pressure-sensitive adhesive layer 23 on one surface of the base layer 21 but not having the pressure-sensitive adhesive layer 23 on the other surface, heating is performed with a heat source provided on the base layer 21 side (the side opposite to the side of the pressure-sensitive adhesive layer 23). This is because, then, in the pre-bonding heating step, the base layer 21 of the resin film 20 becomes more flexible and is easily brought into a state more adapted for bonding, and also, the viscosity of the pressure-sensitive adhesive layer 23 to be bonded to the resin substrate 10 is appropriately reduced, thereby further enhancing the followability of the resin film 20 with respect to the resin substrate 10 in the bonding step to be described later. Specific examples include a step of heating by bringing a heater into direct contact with the surface of the base layer 21 (the following other surface) of the resin film 20 having the pressure-sensitive adhesive layer 23 on one surface of the base layer 21 but not having a layer other than the base layer 21 such as the pressure-sensitive adhesive layer 23 on the other surface (for example, (II) of FIG. 11), and a step of heating via the atmosphere with a heater installed so as not to be in contact with the surface of this base layer 21 but installed on this surface side so as to be in substantially parallel with this surface (for example, FIG. 12).

Furthermore, in this pre-bonding heating step, it is more preferable to heat the resin film 20 at a temperature higher than the glass transition point (Tg) of the pressure-sensitive adhesive component constituting the pressure-sensitive adhesive layer 23 to be bonded to the resin substrate 10. This is because in the case of the pressure-sensitive adhesive layer 23 made of a pressure-sensitive adhesive component having a Tg close to the Tg of the resin material constituting the base layer 21, the viscosity of the pressure-sensitive adhesive layer 23 to be bonded to the resin substrate 10 is further reduced easily in this pre-bonding heating step, thereby further enhancing the followability of the resin film 20 with respect to the resin substrate 10 in the subsequent bonding step.

<Bonding step>

Next, the bonding step of the method for manufacturing the microchannel chip 100 according to the present embodiment will be described in detail.

In this bonding step, as shown in (III) of FIG. 11, the pressure-sensitive adhesive layer 23 of the resin film 20 heated in the above-mentioned pre-bonding heating step is bonded to the surface of the resin substrate 10 on which the channel groove 11 is formed. Specifically, this resin substrate 10 and the heated resin film 20 are bonded to each other by pressure bonding such that the pressure-sensitive adhesive layer 23 of the resin film 20 covers the surface of the resin substrate 10 on which the channel groove 11 is formed, thereby obtaining the microchannel chip 100. In the bonding between the resin substrate 10 and the resin film 20, a press machine or the like can be used, but unlike bonding by heat-welding, heating to melt the resin is not performed at the time of pressure bonding because bonding is performed by the pressure-sensitive adhesiveness of the pressure-sensitive adhesive layer 23. However, this bonding step is started before the effect of heating the resin film 20 in the above-mentioned pre-bonding heating step is lost, that is, as soon as possible after the pre-bonding heating step. In particular, it is suitable to start the bonding step while the temperature of the resin film 20 is within the range of $\pm 20°C$ around the glass transition point (Tg) of the resin material constituting the base layer 21.

In addition, in this bonding step, not only bonding between one resin substrate 10 and one resin film 20 as shown in FIG. 1, but also bonding of each of the resin films 20 to both surfaces of the resin substrate 10 on which the channel grooves 11 are formed, and bonding of the surface of the resin substrate 10 on which the channel groove 11 is formed to each of the pressure-sensitive adhesive layers 23 in the resin film 20 having the pressure-sensitive adhesive layers 23 on both surfaces of the base layer 21 may be performed.

As described above, in the microchannel chip 100 obtained by the method for manufacturing a microchannel chip of the above-mentioned embodiment, when the square of the surface roughness (Rz) of the bonding surface 30 which is the surface at which the resin substrate 10 and the pressure-sensitive adhesive layer 23 of the resin film 20 are bonded is defined as X ($\mu m^2$), and the total film gap area of the resin film 20 per 100 $\mu m^2$ of the bonding surface 30 is defined as Y ($\mu m^2$), all of Relational Expression (1) Y $\leq$ 0.64X - 12.2, Relational Expression (2) X $\geq$ 23.0, and Relational Expression (3) Y $\leq$ 20.0 are satisfied. In addition, in this microchannel chip 100, few air bubbles are generated and remain at the time of liquid feeding to the channel groove 11 and at the time of storage after liquid feeding.

In addition, the above-mentioned embodiment includes the following technical concept.

<1> A microchannel chip including: a resin substrate in which a channel groove is formed on at least one surface of the resin substrate; and a resin film which has a base layer and a pressure-sensitive adhesive layer and is bonded to the resin substrate such that the pressure-sensitive adhesive layer covers the channel groove, in which when a square of a surface roughness (Rz) of a bonding surface at which the resin substrate and the pressure-sensitive adhesive layer of the resin film are bonded is defined as X ($\mu m^2$), and a total film gap area of the resin film per 100 $\mu m^2$ of the bonding surface is defined as Y ($\mu m^2$), all of Relational Expressions (1), (2), and (3) are satisfied.

$$(1)\ Y \leq 0.64X - 12.2$$

$$(2)\ X \geq 23.0$$

$$(3)\ Y \leq 20.0$$

<2> The microchannel chip according to <1>, in which the square of the surface roughness (Rz) of the bonding surface is 30.25 or more (X $\geq$ 30.25).

<3> The microchannel chip according to <1> or <2>, in which the square of the surface roughness (Rz) of the bonding surface is 56.25 or less (X $\leq$ 56.25).

<4> The microchannel chip according to any one of <1> to <3>, in which the base layer of the resin film is made of any one selected from the group consisting of polystyrene resin, polycarbonate resin, polyacrylic resin, and cyclic olefin resin.

<5> A method for manufacturing a microchannel chip having a resin substrate in which a channel groove is formed on at least one surface, and a resin film which has a base layer and a pressure-sensitive adhesive layer and is bonded to the resin substrate such that the pressure-sensitive adhesive layer covers the channel groove, the method including: a pre-bonding heating step of heating the resin film before being bonded to the resin substrate for 1 to 300 seconds at a temperature within a range of $\pm 20°C$ around a glass transition point (Tg) of a resin material constituting the base layer of the resin film; and a bonding step of bonding, by pressure bonding, the pressure-sensitive adhesive layer of the heated resin film after the pre-bonding heating step to the surface of the resin substrate on which the channel groove is formed.

<6> The method for manufacturing a microchannel chip according to <5>, in which the resin film in which a surface of the pressure-sensitive adhesive layer is exposed is heated in the pre-bonding heating step.

<7> The method for method for manufacturing a microchannel chip according to <5> or <6>, in which the resin film is heated with a heat source provided on a side opposite to the pressure-sensitive adhesive layer side in the pre-bonding heating step.

<8> The method for method for manufacturing a microchannel chip according to any one of <5> to <7>, in which the resin film is heated at a temperature higher than a glass transition point (Tg) of a pressure-sensitive adhesive component constituting the pressure-sensitive adhesive layer in the pre-bonding heating step.

<9> The method for method for manufacturing a microchannel chip according to any one of <5> to <8>, in which the base layer of the resin film heated in the pre-bonding heating step is made of any one selected from the group consisting of polystyrene resin, polycarbonate resin, polyacrylic resin, and cyclic olefin resin.

Examples

Hereinbelow, examples of the present invention will be described, but the present invention is not limited to the following examples, and various modifications can be made within the technical concept of the present invention.

(Example 1)

Various resin substrates which were made of polyacrylic resin, which had a channel groove (having 10 mm or more in length of a region in which a channel groove opening width (W) was 200 $\mu$m and a channel groove depth (D) was 30 $\mu$m) formed on one surface, and in which surface roughnesses (Rz) of surfaces on which the channel groove was formed were different; and a resin film having a base layer (the thickness (X) of the base layer being 125 $\mu$m) and a pressure-sensitive adhesive layer provided on one surface thereof (the thickness (Y) of the pressure-sensitive adhesive layer being 10 $\mu$m), which were both made of polyacrylic resin, were prepared. The resin film was pressure-bonded via the pressure-sensitive adhesive layer to the surfaces of the various resin substrates on which the channel groove was formed. Thereby, four types of microchannel chip samples (samples 1 to 4) were produced, each having a different surface roughness (Rz) of a bonding surface between the pressure-sensitive adhesive layer of the resin film and the resin substrate. Tables 1-1 and 1-2 show the surface roughness (Rz) of the bonding surface of each sample thus obtained. The surface roughnesses (Rz) of these bonding surfaces were all measured in a noncontact manner using a laser microscope VK-9710 manufactured by KEYENCE CORPORATION.

Using the microchannel chips as the samples 1 to 4, a liquid feeding test of feeding water (ink water) colored with red ink to the channel grooves was performed. In this liquid feeding test, in addition to the test in which the microchannel chips as the samples 1 to 4 that had been stored at room temperature (25°C) were used as they were at room temperature, the test in which the microchannel chips as the samples 1 to 4 that had been preliminarily stored in a refrigerator (4°C) overnight (about 10 minutes) were used at room temperature was performed together.

In addition, for each sample at the time of feeding the ink water, after storage at room temperature for 1 hour after feeding of the ink water (after 1 hour at room temperature), and after storage at 37°C for 1 hour after feeding of the ink water (after 1 hour at 37°C), the air bubble generation circumstance in the region in which the above-mentioned channel groove had the channel groove opening width (W) of 200 $\mu$m and the channel groove depth (D) of 30 $\mu$m was evaluated based on the evaluation criteria described below.

The maximum number of bubbles generated per 10 mm in length of the channel groove was 1 or less: A

The maximum number of bubbles generated per 10 mm in length of the channel groove was 2: B

The maximum number of bubbles generated per 10 mm in length of the channel groove was 3 or 4: C

The maximum number of bubbles generated per 10 mm in length of the channel groove was 5 or 6: D

The maximum number of bubbles generated per 10 mm in length of the channel groove was 7 or more: E

Regarding these results, Table 1-1 below shows the results of the test using the microchannel chips as the samples 1 to 4 that had been stored at room temperature, and Table 1-2 below shows the results of the test using the microchannel chips as the samples 1 to 4 that had been preliminarily stored in a refrigerator.

[Table 1-1]

| Sample No. | Rz of bonding surface ($\mu$m) | Air bubble generation circumstance | | |
|---|---|---|---|---|
| | | At time of liquid feeding | After 1 hour at room temperature | After 37°C for 1 hour |
| 1 | 12.476 | A | B | C |

(continued)

| Sample No. | Rz of bonding surface (μm) | Air bubble generation circumstance | | |
|---|---|---|---|---|
| | | At time of liquid feeding | After 1 hour at room temperature | After 37°C for 1 hour |
| 2 | 8.565 | A | A | C |
| 3 | 6.346 | A | A | A |
| 4 | 4.626 | A | A | A |

[Table 1-2]

| Sample No. | Rz of bonding surface (μm) | Air bubble generation circumstance | | |
|---|---|---|---|---|
| | | At time of liquid feeding | After 1 hour at room temperature | After 37°C for 1 hour |
| 1 | 12.476 | A | D | E |
| 2 | 8.565 | A | D | E |
| 3 | 6.346 | A | D | E |
| 4 | 4.626 | A | A | A |

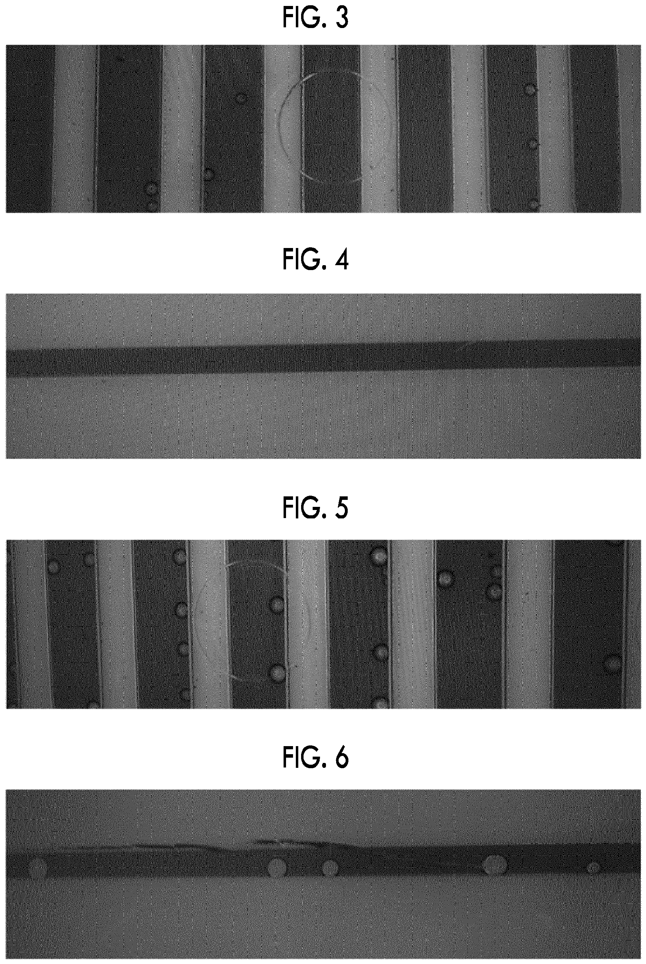

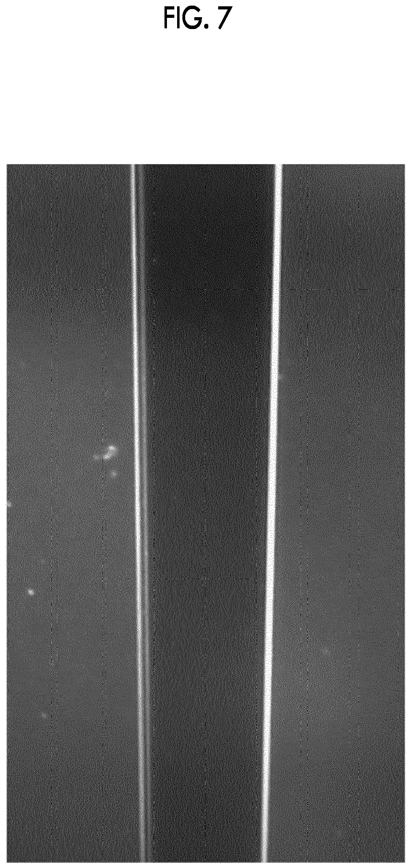

In addition, for each state of the sample 1 and the sample 4 in Table 1-1 above, and the sample 1, the sample 3, and the sample 4 in Table 1-2 above after 1 hour at 37°C, the vicinity of the channel groove was observed using a microscope (manufactured by Olympus Corporation, Stereo Microscope SZ61) to capture each image. FIGS. 3 to 7 show these captured images. FIG. 3 shows the sample 1 of Table 1-1, FIG. 4 shows the sample 4 of Table 1-1, FIG. 5 shows the sample 1 of Table 1-2, FIG. 6 shows the sample 3 of Table 1-2, and FIG. 7 shows the sample 4 of Table 1-2.

From the above results, it became clear that in the microchannel chip obtained by bonding the resin substrate to the resin film by sticking, very few air bubbles were generated and remained in the channel groove even when storage at 37°C after liquid feeding to the channel groove by using the microchannel chip in which the surface roughness (Rz) of the bonding surface between the resin substrate and the pressure-sensitive adhesive layer of the resin film was 7 μm or less. For example, in the microchannel chips as the samples 1 and 2, the maximum number of bubbles generated (the number of bubbles remained) per 10 mm in length in the region of the channel groove was 3 to 4 after 1 hour at 37°C (Table 1-1, FIG. 3), whereas in the microchannel chips as the samples 3 and 4, generated or remained air bubbles were not recognized in the region of the above-mentioned channel groove under this condition (Table 1-1, FIG. 4).

It became clear that particularly when the surface roughness (Rz) of the bonding surface between the resin substrate and the pressure-sensitive adhesive layer of the resin film was less than 6 μm, even in the case of preliminary storage in a refrigerator, very few air bubbles were generated and remained in the channel groove when storage at room temperature and 37°C after liquid feeding to the channel groove. For example, in the microchannel chips as the samples 1 to 3 that had been preliminarily stored in a refrigerator, the maximum number of bubbles generated (the number of bubbles remained) per 10 mm in length in the region of the above-mentioned channel groove was 5 or 6 after 1 hour at room temperature (Table 1-2), and the maximum number was 7 or more after 1 hour at 37°C (Table 1-2, FIGS. 5 and 6), whereas in the microchannel chip as the sample 4 that had been preliminarily stored in a refrigerator, generated or remained air bubbles were not recognized in the region of the above-mentioned channel groove under any of these conditions (Table 1-2, FIG. 7).

(Example 2)

A rectangular resin substrate of 60 mm × 100 mm which was made of polyacrylic resin and which had a channel groove (having 10 mm or more in length of a region in which a channel groove opening width (W) was 200 μm and a channel groove depth (D) was 30 μm) formed on one surface; and various resin films having the same rectangular size as the above-mentioned resin substrate, and having a base layer and a pressure-sensitive adhesive layer on one surface thereof, which were both made of polyacrylic resin, were prepared. These resin films were pressure-bonded via the pressure-sensitive adhesive layers to the surface of the resin substrate on which the channel groove was formed. Thereby, nine types of microchannel chip samples (samples 1 to 9) were produced, each having a different thickness (X) of the base layer or a different thickness (Y) of the pressure-sensitive adhesive layer of the resin film. In any of the samples, the surface roughness (Rz) on the bonding surface between the resin substrate and the resin film was 12.476 $\mu$m. The surface roughnesses (Rz) of these bonding surfaces were all measured in a noncontact manner using a laser microscope VK-9710 manufactured by KEYENCE CORPORATION. In addition, Table 2-1 below shows the thickness (X: $\mu$m) of the base layer and the thickness (Y: $\mu$m) of the pressure-sensitive adhesive layer of the resin film of each sample.

Using the microchannel chips as the samples 1 to 9, a liquid feeding test of feeding water to the channel grooves was performed. In this liquid feeding test, each sample that had been preliminarily stored overnight (about 10 hours) in a refrigerator (4°C) was used at room temperature (25°C).

In addition, for each microchannel chip sample immediately after feeding of water and after storage at 37°C for 1 hour after feeding of water (after 1 hour at 37°C), the air bubble generation circumstance in the region in which the above-mentioned channel groove had the channel groove opening width (W) of 200 $\mu$m and the channel groove depth (D) of 30 $\mu$m was evaluated based on the evaluation criteria described below. These results are also shown in Table 2-1 below. In addition, the results after 1 hour at 37°C are shown in FIG. 8.

The maximum number of bubbles generated per 10 mm in length of the channel groove was 1 or less: A
The maximum number of bubbles generated per 10 mm in length of the channel groove was 2 or more: C

[Table 2-1]

| Sample No. | Thickness of base layer ($\mu$m) | Thickness of pressure-sensitive adhesive layer ($\mu$m) | Presence of absence of generated air bubbles | |
|---|---|---|---|---|
| | | | Immediately after liquid feeding | After 37°C for 1 hour |
| 1 | 125 | 10 | A | C |
| 2 | | 20 | A | C |
| 3 | | 30 | A | A |
| 4 | 75 | 10 | A | A |
| 5 | | 20 | A | A |
| 6 | | 30 | A | A |
| 7 | 50 | 10 | A | A |
| 8 | | 20 | A | A |
| 9 | | 30 | A | A |

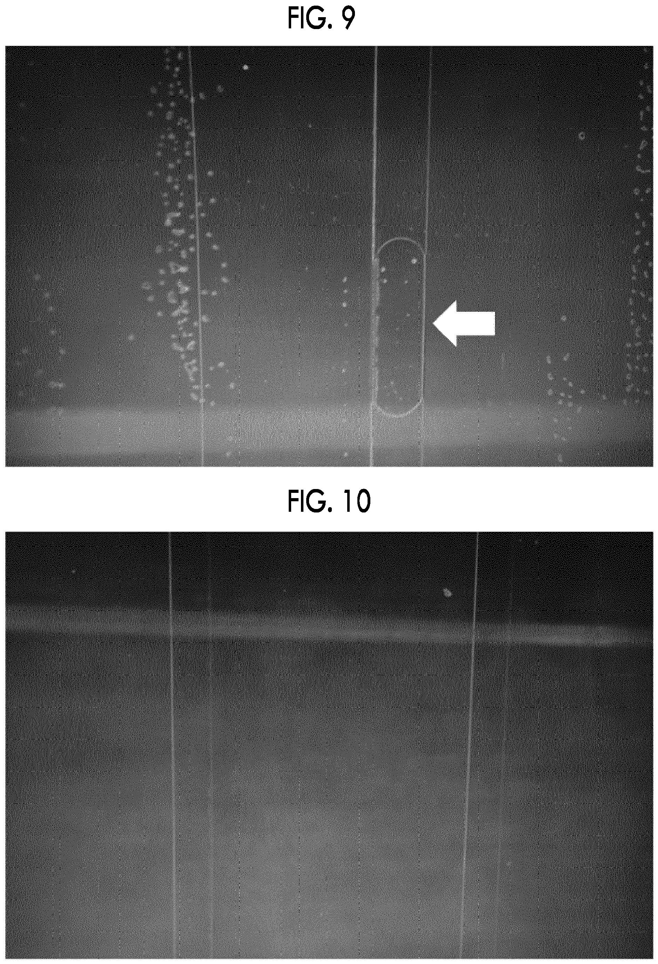

In addition, for each state of the sample 1 and the sample 9 in Table 2-1 above after 1 hour at 37°C, the vicinity of the channel groove was observed using a microscope (manufactured by Olympus Corporation, Stereo Microscope SZ61) to capture each image. FIGS. 9 and 10 show these captured images. FIG. 9 shows the captured image of the sample 1, and FIG. 10 shows the captured image of the sample 9.

From the above results (especially the graph of FIG. 8), it became clear that in the microchannel chip obtained by bonding the resin substrate to the pressure-sensitive adhesive layer of the resin film by sticking, very few air bubbles were generated and remained in the channel groove even when storage at 37°C after liquid feeding to the channel groove by using the microchannel chip in which the thickness (X) of the base layer of the resin film and the thickness (Y) of the pressure-sensitive adhesive layer bonded to the resin substrate satisfied Relational Expression (1) Y ≥ 0.4X - 25. For example, after 1 hour at 37°C, in the microchannel chips as the samples 1 and 2, at most 2 or more air bubbles were recognized to be generated or remained per 10 mm in length in the region of the above-mentioned channel groove (Table 2-1, arrow in FIG. 9), whereas in the microchannel chips as the samples 3 to 9, neither generation nor residual air bubbles were recognized per 10 mm in length in the region of the above-mentioned channel groove even under these conditions (Table 2-1, FIG. 10). In addition, regarding the thickness of each of the base layer and the pressure-sensitive adhesive layer of the resin film, it became clear that the closer (smaller) the thickness (X) of the base layer of the resin film approached to 50 $\mu$m, or the closer (larger) the thickness (Y) of the pressure-sensitive adhesive layer of the resin film approached to 30 $\mu$m, the followability between the pressure-sensitive adhesive layer of the resin film and the resin substrate was enhanced, which was more preferable from the viewpoint of preventing air bubbles from generating or remaining (Table 2-1, FIG. 8).

(Example 3)

Two types of rectangular resin substrates which were made of polyacrylic resin, which had a channel groove formed on one surface, and in which surface roughnesses (Rz) of surfaces on which the channel groove was formed were different; and a resin film having a base layer a pressure-sensitive adhesive layer provided on one side thereof, which were both made of polyacrylic resin (base layer: thickness 125 $\mu$m, Tg of a constituent resin material (PMMA): 100°C; pressure-sensitive adhesive layer: thickness 10 $\mu$m, Tg of a constituent pressure-sensitive adhesive component (polyacrylic pressure-sensitive adhesive): 10°C) were prepared. In addition, before bonding to the resin substrate, the resin film was left to stand such that the base layer side was in contact with a stainless steel shelf of an oven (manufactured by TOKYO RIKAKIKAI CO., LTD., blower constant temperature dryer WFO-520) in the state in which the pressure-sensitive adhesive layer was exposed, and heating was performed at a temperature of 100°C for 2 minutes (120 seconds). In addition, the heated resin film was pressure-bonded via the pressure-sensitive adhesive layer to the surface of the resin substrate on which the channel groove was formed, thereby manufacturing two types of microchannel chips according to Example 3 (samples 2 and 4). Two types of microchannel chips according to comparative examples were also manufactured (samples 1 and 3) in the same manner as in Example 3 described above except that the resin film was not heated (no pre-bonding heating step was included). In addition, the surface roughnesses (Rz) of these bonding surfaces were all measured in a noncontact manner using a laser microscope VK-9710 manufactured by KEYENCE CORPORATION. As shown in Table 3-1 below, the surface roughness (Rz) of the bonding surface of the samples 1 and 2 was 6.346 $\mu$m, and the surface roughness (Rz) of the bonding surface of the samples 3 and 4 was 5.007 $\mu$m.

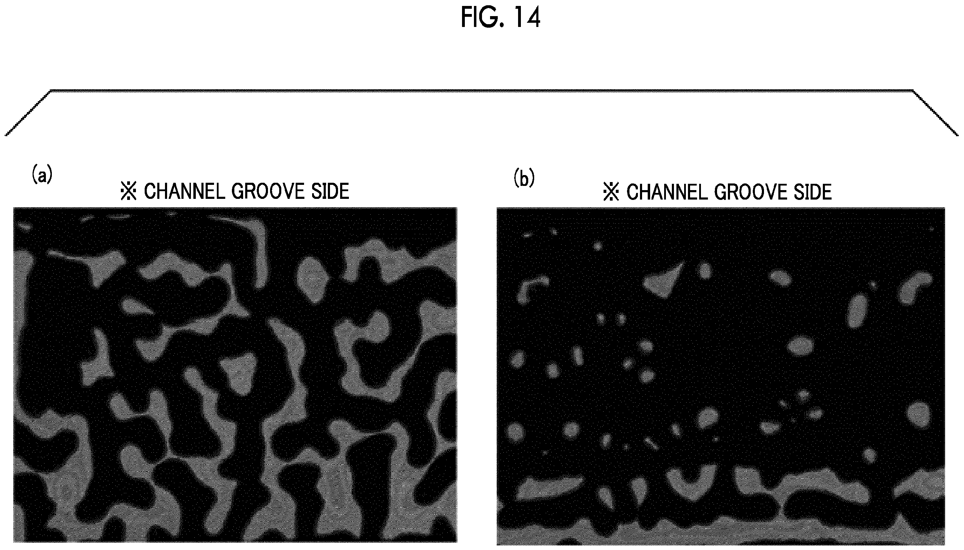

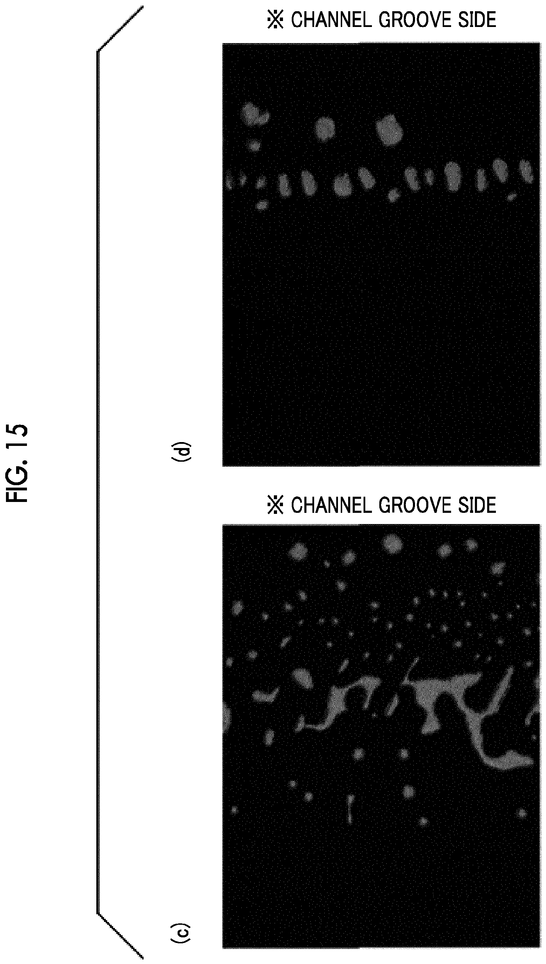

The bonding surface between the resin substrate and the resin film of the four types of the microchannel chips according to Example 3 and the comparative examples was observed and captured using a laser microscope (manufactured by KEYENCE CORPORATION, VK-9710, magnification of 50 times), and the total film gap area was calculated with analysis software (manufactured by KEYENCE CORPORATION, VK-Analyzer). These results are shown in Table 3-1 below and FIG. 13 (black circles), and the captured images are shown in FIGS. 14 and 15. FIG. 14 shows the captured images of the microchannel chip having the surface roughness (Rz) of the bonding surface of 6.346 $\mu$m (where (a) in FIG. 14 is the sample 1, and (b) in FIG. 14 is the sample 2). FIG. 15 shows the captured images of the microchannel chip having the surface roughness (Rz) of the bonding surface of 5.007 $\mu$m (where (c) in FIG. 15 is the sample 3, and (d) in FIG. 15 is the sample 4). In addition, in any of the captured images of FIGS. 14 and 15, the side (channel groove side) on which the channel groove was formed is shown as a reference, and in both of the images, a light-colored portion is a film gap portion.

As a result, by bonding after heating the resin film under predetermined conditions before bonding, the total film gap area on the bonding surface was significantly reduced in any of the microchannel chips of Example 3 (samples 2 and 4) as compared to the microchannel chips of each of the comparative examples (samples 1 and 3) (Table 3-1, FIG. 13 to 15). In particular, in the microchannel chip in which the surface roughness (Rz) of the bonding surface was as large as 6.346 $\mu$m, in the sample 1 which was manufactured without heating the resin film before bonding, the total film gap area per 100 $\mu$m$^2$ of the bonding surface was 27.68 $\mu$m$^2$ (27.68% as a percentage) (Table 3-1, (a) of FIG. 14, and the like), and generated air bubbles and residual air bubbles were conspicuous when the liquid was fed to the channel groove and storage was performed at room temperature (25°C), whereas in the sample 2 which was manufactured by bonding after heating the resin film before bonding, the total film gap area per 100 $\mu$m$^2$ of the bonding surface was 12.65 $\mu$m$^2$ (12.65% as a percentage) (Table 3-1, (b) of FIG. 14, and the like), almost no air bubbles were generated or remained even when the liquid was fed to the channel groove and storage was performed at room temperature (25°C).

[Table 3-1]

| Sample No. | Rz of bonding surface ($\mu$m) | Pre-bonding heating step | Total film gap area calculated with analysis software in surface (60342.141 $\mu$m$^2$) of entire laser microscope image of bonding surface ($\mu$m$^2$) | Total film gap area per 100 $\mu$m$^2$ of bonding surface ($\mu$m$^2$) |
|---|---|---|---|---|
| 1 | 6.346 | Performed | 16699.91 | 27.68 |
| 2 | | Not performed | 7632.31 | 12.65 |
| 3 | 5.007 | Not performed | 3381.91 | 5.60 |
| 4 | | Performed | 1744.20 | 2.89 |

Reference Signs List

10 Resin substrate

11 Channel groove

13 Port

20 Resin film

21 Base layer

23 Pressure-sensitive adhesive layer

25 Peelable film

30 Bonding surface

100 Microchannel chip

300 Heater

X Thickness of base layer

Y Thickness of the pressure-sensitive adhesive layer

D Channel groove depth

W Channel groove opening width

## Claims

1. A microchannel chip comprising:

   a resin substrate in which a channel groove is formed on at least one surface of the resin substrate; and
   a resin film which has a base layer and a pressure-sensitive adhesive layer and is bonded to the resin substrate such that the pressure-sensitive adhesive layer covers the channel groove,
   wherein when a thickness of the base layer of the resin film is defined as X ($\mu$m), and a thickness of the pressure-sensitive adhesive layer of the resin film is defined as Y ($\mu$m), all of Relational Expressions (1) to (3) are satisfied,

$$(1)\ Y \geq 0.4X - 25,$$

$$(2)\ 50 \geq Y \geq 3,$$

   and

$$(3)\ X \geq 40.$$

2. The microchannel chip according to Claim 1, wherein the thickness X ($\mu$m) of the base layer of the resin film and the thickness Y ($\mu$m) of the pressure-sensitive adhesive layer of the resin film further satisfy Relational Expression (4),

$$(4)\ Y \geq 0.4X - 22.$$

3. The microchannel chip according to Claim 1 or 2, wherein the thickness Y ($\mu$m) of the pressure-sensitive adhesive layer of the resin film is 40 $\mu$m or less (40 $\geq$ Y).

4. The microchannel chip according to any one of Claims 1 to 3, wherein the thickness X ($\mu$m) of the base layer of the resin film is 50 $\mu$m or more and 130 $\mu$m or less ($130 \geq X \geq 50$).

5. The microchannel chip according to any one of Claims 1 to 4, wherein the pressure-sensitive adhesive layer of the resin film is made of polyacrylic resin.

6. The microchannel chip according to any one of Claims 1 to 5, wherein the base layer of the resin film is made of any one selected from the group consisting of polystyrene resin, polycarbonate resin, polyacrylic resin, and cyclic olefin resin.

# FIG. 1

# FIG. 2

## FIG. 3

## FIG. 4

## FIG. 5

## FIG. 6

FIG. 7

# FIG. 8

EP 4 230 573 A1

## FIG. 9

## FIG. 10

FIG. 11

FIG. 12

# FIG. 13

EP 4 230 573 A1

FIG. 14

(a)

※ CHANNEL GROOVE SIDE

(b)

※ CHANNEL GROOVE SIDE

FIG. 15

※ CHANNEL GROOVE SIDE

(d)

※ CHANNEL GROOVE SIDE

(c)

## INTERNATIONAL SEARCH REPORT

| | International application No. |
| --- | --- |
| | **PCT/JP2021/033930** |

**A. CLASSIFICATION OF SUBJECT MATTER**

**B81B 1/00**(2006.01)i; **B81C 3/00**(2006.01)i; **G01N 37/00**(2006.01)i; **G01N 35/08**(2006.01)i; **B01J 19/00**(2006.01)i;
**B29C 65/48**(2006.01)i
FI: B01J19/00 321; B81B1/00; G01N37/00 101; B29C65/48; B81C3/00; G01N35/08 A

According to International Patent Classification (IPC) or to both national classification and IPC

**B. FIELDS SEARCHED**

Minimum documentation searched (classification system followed by classification symbols)

B81B1/00; B81C3/00; G01N37/00; G01N35/00; B01J19/00; B29C65/48

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2007-240461 A (SUMITOMO BAKELITE CO., LTD.) 20 September 2007 (2007-09-20) paragraphs [0011]-[0035], fig. 1-7 | 1-6 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 November 2021** | **14 December 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2021/033930**

| Patent document cited in search report | Publication date (day/month/year) | Patent family member(s) | Publication date (day/month/year) |
|---|---|---|---|
| JP 2007-240461 A | 20 September 2007 | (Family: none) | |

Form PCT/ISA/210 (patent family annex) (January 2015)

**REFERENCES CITED IN THE DESCRIPTION**

**Patent documents cited in the description**

- JP 2014206512 A